(19) Europäisches Patentamt
European Patent Office
Office européen des brevets

(11) **EP 4 122 979 A1**

(12) **EUROPEAN PATENT APPLICATION**
published in accordance with Art. 153(4) EPC

(43) Date of publication:
**25.01.2023 Bulletin 2023/04**

(21) Application number: **21770569.8**

(22) Date of filing: **04.03.2021**

(51) International Patent Classification (IPC):
***C08J 9/16*** *(2006.01)*

(52) Cooperative Patent Classification (CPC):
**C08J 9/16**

(86) International application number:
**PCT/JP2021/008492**

(87) International publication number:
**WO 2021/187142 (23.09.2021 Gazette 2021/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.03.2020 JP 2020048353**

(71) Applicant: **Kaneka Corporation**
**Osaka-shi, Osaka 530-8288 (JP)**

(72) Inventors:
• **IIDA, Atsushi**
**Takasago-shi, Hyogo 676-8688 (JP)**
• **SUZUKI, Kirito**
**Takasago-shi, Hyogo 676-8688 (JP)**
• **KIGUCHI, Taro**
**Takasago-shi, Hyogo 676-8688 (JP)**

(74) Representative: **Vossius & Partner**
**Patentanwälte Rechtsanwälte mbB**
**Siebertstraße 3**
**81675 München (DE)**

(54) **EXPANDABLE RESIN PARTICLES, EXPANDED PARTICLES, MOLDED FOAM, AND METHOD FOR PRODUCING EXPANDABLE RESIN PARTICLES**

(57) Expandable resin particles in accordance with an embodiment of the present invention contain: a base resin containing a specific amount of a styrene unit and a specific amount of an acrylonitrile unit; and a blowing agent, and D2230/D1600 in an ATR-FTIR spectrum of expanded particles of the expandable resin particles being not less than 1.20.

EP 4 122 979 A1

**EP 4 122 979 A1**

**Description**

Technical Field

The present invention relates to expandable resin particles, expanded particles, a foamed molded product, and a method for producing expandable resin particles.

Background Art

Expandable polystyrene resin particles are a well-known type of expandable resin particles. Expandable polystyrene resin particles are generally widely utilized due to having easy moldability into a molded product by in-mold foam molding and thus being inexpensive.

Foamed molded products made of expandable polystyrene resin particles are excellent in lightweight property and heat insulating property but unfortunately high in emission, per unit time, of volatile organic compounds (hereinafter, also referred to as "VOCs" which is an acronym of "volatile organic compounds") contained in the foamed molded products. Accordingly, use of such a foamed molded product in the fields of automobiles, building materials, and the like, in which standards on VOCs are strict, involves a treatment such as drying the foamed molded product for several days. Such a treatment contributes to cost increase.

Techniques in response to the above issue have been disclosed in Patent Literatures 1 to 3. Patent Literature 1 discloses a method of producing expandable polystyrene-based resin particles, characterized by polymerizing a styrene-based monomer with use of 1,1-bis(t-butylperoxy)-cyclohexane or 1,1-bis(t-amylperoxy)-3,3,5-trimethylcyclohexane as a polymerization initiator.

Patent Literatures 2 and 3 each disclose expandable resin particles comprising (i) a copolymer consisting of a styrene monomer, an acrylonitrile monomer, and an alpha-methylstyrene monomer and (ii) a blowing agent. The techniques disclosed in Patent Literatures 2 and 3 use 1,1-bis(t-amylperoxy)-3,3,5-trimethylcyclohexane as a polymerization initiator.

Patent Literature 4 discloses a method for producing expandable polystyrene-based resin particles, the method involving impregnating a blowing agent in a polymerizable monomer (A) containing a styrene-based monomer during or after the polymerizable monomer (A) is subjected to suspension polymerization in an aqueous medium, wherein a polymerizable monomer (B) that is copolymerizable with the polymerizable monomer (A) is added in an amount of not less than 0.5 parts by weight and not more than 3 parts by weight relative to a feeding amount of 100 parts by weight of the polymerizable monomer (A) when a polymerization conversion rate of the polymerizable monomer (A) is not less than 85% by weight.

Patent Literature 5 discloses expandable resin particles containing: a base resin containing, as structural units, a styrene unit and an acrylonitrile unit; and a blowing agent, the expandable resin particles having a styrene content of not more than 20 ppm and an ethylbenzene content of not more than 130 ppm.

Citation List

[Patent Literatures]

[Patent Literature 1]
Japanese Patent Application Publication, Tokukai, No. 2017-052894
[Patent Literature 2]
Japanese Patent Application Publication, Tokukai, No. 2015-151486
[Patent Literature 3]
Japanese Patent Application Publication, Tokukai, No. 2016-164213
[Patent Literature 4]
Japanese Patent Application Publication, Tokukai, No. 2008-260795
[Patent Literature 5]
International Publication No. WO2020/032178

Summary of Invention

Technical Problem

In terms of VOC reduction, the above-described known techniques are improvements as compared with expandable resin particles which were common on the technology level at the time of development of the known techniques. However, the level of interest in VOC reduction is high in the market, and the above-described known techniques therefore still have room for improvement in terms of VOC reduction.

An embodiment of the present invention has been accomplished in response to the above issue, and an object thereof is to provide novel expandable resin particles with use of which a novel foamed molded product in which a smaller amount of VOC is emitted can be provided, expanded particles, a foamed molded product, and a method for producing the expandable resin particles.

Solution to Problem

The inventors of the present invention conducted a diligent study in order to attain the object, and completed the present invention. Specifically, embodiments of the present invention include the following.

Expandable resin particles containing: a base resin containing, as structural units, a styrene unit and an acrylonitrile unit; and a blowing agent, in the base resin, (a) a content of the styrene unit being 80.0 parts by weight to 84.5 parts by weight and a content of the acrylonitrile unit being 15.5 parts by weight to 20.0 parts by weight, and (b) a total content of the styrene unit and the acrylonitrile unit being 100 parts by weight, and expanded particles having D2230/D1600 of not less than 1.20, the expanded particles being produced by expanding the expandable resin particles at an expanding ratio of 22 times, where the D2230/D1600 is a ratio between an absorbance at a wavelength of 2230 $cm^{-1}$ (D2230) and an absorbance at a wavelength of 1600 $cm^{-1}$ (D1600) in an infrared absorption spectrum obtained by attenuated total reflection Fourier-transform infrared spectroscopy with respect to a surface of the expanded particles.

A method for producing expandable resin particles, including: a copolymerization step of copolymerizing a monomer mixture containing a styrene monomer and an acrylonitrile monomer to obtain a copolymer; and a blowing agent impregnation step of impregnating a blowing agent in the copolymer thus obtained, the copolymerization step further including (a) a feeding step of feeding, into a container, an initial monomer mixture containing the styrene monomer and a part of the acrylonitrile monomer, and (b) an addition step of adding a part of the acrylonitrile monomer to a reaction mixture after polymerization of the initial monomer mixture is initiated, in the copolymerization step, (a) the styrene monomer being used in a total amount of 80.0 parts by weight to 84.5 parts by weight and the acrylonitrile monomer being used in a total amount of 15.5 parts by weight to 20.0 parts by weight, and (b) the styrene monomer and the acrylonitrile monomer being used in a total amount of 100 parts by weight, and in the addition step, the part of the acrylonitrile monomer being added to the reaction mixture in an amount of 2.0 parts by weight to 5.0 parts by weight.

Advantageous Effects of Invention

An embodiment of the present invention brings about an effect of providing novel expandable resin particles with use of which a novel foamed molded product in which a smaller amount of VOC is emitted can be provided, expanded particles, a foamed molded product, and a method for producing the expandable resin particles.

Description of Embodiments

The following description will discuss an embodiment of the present invention. The present invention is not, however, limited to these embodiments. The present invention is not limited to the arrangements described below, but may be altered within the scope of the claims by a person skilled in the art. The present invention also encompasses, in its technical scope, any embodiment derived by combining technical means disclosed in differing embodiments and Examples. Further, it is possible to form a new technical feature by combining the technical means disclosed in the respective embodiments. All academic and patent documents cited in the present specification are incorporated herein by reference. Any numerical range expressed as "A to B" in the present specification means "not less than A and not more than B (i.e., a range from A to B which includes both A and B)" unless otherwise stated.

[1. Technical idea of an embodiment of the present invention]

As a result of study by the inventors of the present invention, a foamed molded product obtained using the expandable resin particles disclosed in each of Patent Literatures 1 to 3 requires a long-term drying treatment in order to meet required standards in the fields of automobiles and building materials on amounts of VOCs emitted. That is, each of the techniques disclosed in Patent Literatures 1 to 3 still has room for improvement in terms of VOC reduction and productivity.

The inventors of the present invention carried out diligent study in order to provide expandable resin particles which have a reduced VOC content and a foamed molded product in which a smaller amount of VOC is emitted, and independently discovered the following new knowledge: (i) that more acrylonitrile units which are present on a surface of expandable resin particles allow a foamed molded product produced from expandable resin particles to have a further smaller VOC emission; and (ii) that a part of acrylonitrile to be used is added during polymerization while not a total amount of the acrylonitrile to be used is blended from an initial stage of polymerization, so that expandable resin particles etc. having many acrylonitrile units on a surface thereof can be provided.

The inventors of the present invention completed an embodiment of the present invention on the basis of these pieces of new knowledge.

[2. Expandable resin particles]

Expandable resin particles in accordance with an embodiment of the present invention contains: a base resin containing, as structural units, a styrene unit and an acrylonitrile unit; and a blowing agent, in the base resin, (a) a content of the styrene unit being 80.0 parts by weight to 84.5 parts by weight and a content of the acrylonitrile unit being 15.5 parts by weight to 20.0 parts by weight, and (b) a total content of the styrene unit and the acrylonitrile unit being 100 parts by weight, and

expanded particles having D2230/D1600 of not less than 1.20, the expanded particles being produced by expanding the expandable resin particles at an expanding ratio of 22 times, where the D2230/D1600 is a ratio between an absorbance at a wavelength of 2230 cm$^{-1}$ (D2230) and an absorbance at a wavelength of 1600 cm$^{-1}$ (D1600) in an infrared absorption spectrum obtained by attenuated total reflection Fourier-transform infrared spectroscopy with respect to a surface of the expanded particles.

"Expandable resin particles in accordance with an embodiment of the present invention" may be hereinafter referred to as "the present expandable resin particles".

With the above arrangement, the present expandable resin particles advantageously allow providing a foamed molded product in which a smaller amount of VOC is emitted. Specifically, the present expandable resin particles advantageously allow providing a foamed molded product in which styrene is emitted in an amount of less than 1.00 ppm, and ethylbenzene is emitted in an amount of less than 10.5 ppm. A foamed molded product in which a smaller amount of VOC is emitted immediately after production is able to meet standards on VOCs required in the fields of automobiles, building materials, and the like, without further requiring a high-temperature, long-time drying step. That is, the present expandable resin particles advantageously allow providing a foamed molded product with high productivity. Note that the amounts in which styrene and ethylbenzene, respectively, are emitted in a foamed molded product will be described later.

Note here that according to the present expandable resin particles, it is possible to provide a foamed molded product by (i) producing expanded particles by a known method with use of the expandable resin particles and (ii) carrying out in-mold foam molding (in-mold molding) by a known method with use of the expanded particles.

(2-1. VOC)

A VOC means, in a broad sense, "any organic compound that is in a gaseous state at the time of its emission or dispersal into the atmosphere from an outlet" as defined by, for example, Air Pollution Control Act of Japan. In each technical field, compounds that should be regulated as VOCs are designated. For example, the Ministry of Health, Labour and Welfare of Japan defines guideline values of indoor concentration with respect to the following substances: formaldehyde, acetaldehyde, toluene, ethylbenzene, xylene, styrene, nonanal, tetradecane, di-n-butyl phthalate, di-2-ethylhexyl phthalate, p-dichlorobenzene, chlorpyrifos, diazinon, and fenobucarb. Japan Automobile Manufacturers Association, Inc. also regulates concentrations of the following substances in an interior of an automobile: formaldehyde, acetaldehyde, toluene, ethylbenzene, xylene, styrene, tetradecane, di-n-butyl phthalate, and di-2-ethylhexyl phthalate.

In the present specification, a "VOC" means "an organic compound (a) which is in a gaseous state at the time of its emission and dispersal into the atmosphere and (b) for which a guideline value of indoor concentration is defined by the Ministry of Health, Labour and Welfare of Japan, among compounds that may be contained in expandable resin particles, expanded particles, or a foamed molded product." Specifically, the "VOC" in the present specification means styrene and ethylbenzene.

(2-2. Base resin)

The base resin contained in the present expandable resin particles contains, as structural units, a styrene unit and an acrylonitrile unit. In the present specification, a "styrene unit" is a structural unit derived from a styrene monomer, and an "acrylonitrile unit" is a structural unit derived from an "acrylonitrile monomer".

Since the base resin contained in the present expandable resin particles contains the acrylonitrile unit as a structural unit, binding force between polymer chains is sufficiently strong. This allows a foamed molded product that can be produced with use of the expandable resin particles to be advantageously excellent in gas barrier property and thus capable of achieving a reduced rate of VOC emission.

In a case where a total content of the styrene unit and the acrylonitrile unit in the base resin is 100 parts by weight, a content of the styrene unit is 80.0 parts by weight to 84.5 parts by weight, preferably 81.0 parts by weight to 84.0 parts by weight, and more preferably 82.0 parts by weight to 83.0 parts by weight, (a) In a case where the content of the styrene unit is not less than 80.0 parts by weight, the expandable resin particles are excellent in moldability. (b) In a case where the content of the styrene unit is not more than 84.5 parts by weight, the expandable resin particles allow providing a foamed molded product excellent in heat resistance.

In a case where the total content of the styrene unit and the acrylonitrile unit in the base resin is 100 parts by weight, a content of the acrylonitrile unit is 15.5 parts by weight to 20.0 parts by weight, preferably 16.0 parts by weight to 19.0 parts by weight, and more preferably 17.0 parts by weight to 18.0 parts by weight. In a case where the content of the acrylonitrile unit is not less than 15.5 parts by weight, a foamed molded product produced from the expandable resin particles has an advantage of (a) being excellent in gas barrier property and thus having a smaller amount of emitted styrene as a VOC, and (b) being excellent in heat resistance. In a case where the content of the acrylonitrile unit is not more than 20.0 parts by weight, the expandable resin particles have an advantage of being excellent in moldability and being produced with increased polymerization stability.

The base resin contained in the present expandable resin particles preferably further contains an alpha-methylstyrene unit as a structural unit. The base resin that further contains the alpha-methylstyrene unit raises a glass transition temperature of the base resin, so that the expandable resin particles allow providing a foamed molded product having a sufficient heat resistance. In the present specification, the "alpha-methylstyrene unit" is a structural unit derived from an alpha-methylstyrene monomer.

In a case where a total content of the styrene unit, the acrylonitrile unit, and the alpha-methylstyrene unit in the base resin is 100 parts by weight, a content of the alpha-methylstyrene unit is preferably 0.0 part by weight to 15.0 parts by weight, more preferably 3.0 parts by weight to 15.0 parts by weight, even more preferably 4.0 parts by weight to 10.0 parts by weight, and particularly preferably 4.0 parts by weight to 7.0 parts by weight. An alpha-methylstyrene monomer has a characteristic of having a methyl group at an alpha position, undergoing a resulting strong steric hindrance, and thus having poor reactivity. In a case where the alpha-methylstyrene unit is contained in the base resin, an alpha-methylstyrene unit site in the base resin has a characteristic of being easily decomposed. Thus, in a case where the content of the alpha-methylstyrene unit in the base resin exceeds 0.0 part by weight, in other words, in a case where an alpha-methylstyrene monomer is used to produce the base resin, polymerization is advantageously easily controlled during production of the expandable resin particles because a polymerization speed is not too fast. Further, in a case where the content of the alpha-methylstyrene unit in the base resin is not more than 15.0 parts by weight, the following results (a) to (c) are obtained. (a) A resulting base resin is not easily decomposed, and the expandable resin particles therefore allow providing a foamed molded product excellent in flame retardancy. (b) Reactivity during a polymerization reaction is not deteriorated, and an average molecular weight of the resulting base resin is therefore not too low. (c) The expandable resin particles have a low content of styrene as a VOC.

The base resin may contain, as a structural unit, a structural unit other than the styrene unit, the acrylonitrile unit, and the alpha-methylstyrene unit. The base resin may further contain, as structural units, for example, (i) a structural unit derived from an olefin-based monomer, (ii) a structural unit derived from a styrene-based monomer other than a styrene monomer and an alpha-methylstyrene monomer, and (iii) a structural unit derived from an acrylic acid ester-based monomer.

Examples of the olefin-based monomer include an ethylene monomer, a propylene monomer, a butene monomer, and a butadiene monomer.

Examples of the styrene-based monomer other than the styrene monomer and the alpha-methylstyrene monomer include styrene-based derivatives such as a paramethylstyrene monomer, a t-butylstyrene monomer, and a chlorostyrene monomer.

Examples of the acrylic acid ester-based monomer include acrylic acid alkyl esters such as methyl acrylate and butyl acrylate.

(2-3. Blowing agent)

The blowing agent contained in the present expandable resin particles are exemplified by, but not limited to, volatile blowing agents such as (a) aliphatic hydrocarbons such as propane, isobutane, normal butane, isopentane, normal pentane, and neopentane cyclohexane and (b) fluorinated hydrocarbons having an ozone depletion potential of 0 (zero), such as difluoroethane and tetrafluoroethane. The blowing agents listed above may be used alone or in combination of two or more thereof.

A content of the blowing agent in the present expandable resin particles is preferably not less than 2 parts by weight and not more than 7 parts by weight, more preferably not less than 3 parts by weight and not more than 6 parts by weight, and even more preferably not less than 4 parts by weight and not more than 5 parts by weight, relative to 100 parts by weight of the expandable resin particles. With the above arrangement, (a) expanded particles having an expanding ratio of not less than 5 times can be produced with use of the expandable resin particles, and (b) the expandable resin particles allow providing a foamed molded product excellent in heat resistance and flame retardancy.

(2-4. Other additives)

The present expandable resin particles may optionally contain other additive(s) in addition to the base resin and the blowing agent. Examples of the other additive(s) include solvents, plasticizing agents, cell adjusting agents, flame retarders, auxiliary flame retarders, heat ray radiation inhibitors, pigments, dyes, and antistatic agents.

The plasticizing agent can be a high boiling point plasticizing agent having a boiling point of not lower than 200°C. Examples of such a plasticizing agent include (a) fatty acid glycerides such as triglyceride stearate, triglyceride palmitate, triglyceride laurate, diglyceride stearate, monoglyceride stearate, (b) vegetable oils such as coconut oil, palm oil, and palm kernel oil, (c) aliphatic esters such as dioctyl adipate and dibutyl sebacate, and (d) organic hydrocarbons such as liquid paraffin and cyclohexane. In a case where the expandable resin particles contain a large amount of any one(s) of these substances listed as the plasticizing agent, a foamed molded product that can be provided with use of the expandable resin particles tends to deteriorate in heat resistance. As such, a content of the plasticizing agent in the present expandable resin particles can be appropriately set so that a foamed molded product which can be provided with use of the expandable resin particles has a desired heat resistance.

The present expandable resin particles may contain a cell adjusting agent in order to adjust a cell diameter of the foamed molded product that can be provided with use of the expandable resin particles. Examples of the cell adjusting agent include (a) aliphatic bisamides such as methylenebisstearylamide and ethylenebisstearylamide and (b) polyethylene wax. A content of the cell adjusting agent in the present expandable resin particles is preferably less than 0.1 parts by weight relative to 100 parts by weight of the expandable resin particles. With the above arrangement, a foamed molded product which can be provided with use of the expandable resin particles does not have a deterioration in heat resistance and an increase in amount of VOC emission, each of which may otherwise be caused in a case where the foamed molded product has fine cells.

The present expandable resin particles may contain a flame retarder in order for a foamed molded product that can be provided with use of the expandable resin particles to have flame retardancy. The flame retarder is preferably a bromine flame retarder. Examples of the bromine flame retarder include 2,2-bis[4'-(2",3"-dibromo-2"-methylpropyloxy)-,3',5'-dibromophenyl]-propane (also known as tetrabromobisphenol A-bis(2,3-dibromo-2-methylpropyl) ether), hexabromocyclododecane, tetrabromocyclooctane, brominated polystyrene, and a brominated butadiene-styrene block copolymer. In terms of easily imparting flame retardancy to a foamed molded product that can be provided with use of the expandable resin particles, the present expandable resin particles preferably contain 2,2-bis[4'-(2",3"-dibromo-2"-methylpropyloxy)-,3',5'-dibromophenyl]-propane as the flame retarder.

A content of the flame retarder in the present expandable resin particles is preferably not less than 1.5 parts by weight and not more than 3.0 parts by weight, and more preferably not less than 1.8 parts by weight and not more than 2.5 parts by weight, relative to 100 parts by weight of the expandable resin particles. (a) In a case where the content of the flame retarder in the expandable resin particles is not less than 1.5 parts by weight relative to 100 parts by weight of the expandable resin particles, a foamed molded product that can be provided with use of the expandable resin particles can have a sufficient flame retardancy. (b) In a case where the content of the flame retarder in the expandable resin particles is not more than 3.0 parts by weight relative to 100 parts by weight of the expandable resin particles, the expandable resin particles have a reduced VOC content and are excellent in moldability.

In a case where the present expandable resin particles contain the flame retarder, it is preferable that the expandable resin particles further contain an auxiliary flame retarder. As the auxiliary flame retarder, a radical generating agent such as a peroxide may be used. Examples of such a radical generating agent include dicumyl peroxide, t-butylperoxy benzoate, 2,3-dimethyl-2,3-diphenylbutane, and 3,4-dialkyl-3,4-diphenylhexane. In terms of providing a foamed molded product that has little effect on a polymerization reaction and has a good flame retardancy, the present expandable resin particles more preferably contain, as the auxiliary flame retarder, a peroxide having a ten-hour half-life temperature of not less than 130°C and not more than 150°C, and particularly preferably contain dicumyl peroxide.

A content of the auxiliary flame retarder in the present expandable resin particles is preferably not less than 0.3 parts by weight and not more than 1.5 parts by weight relative to 100 parts by weight of the expandable resin particles. (a) In a case where the content of the flame retarder in the expandable resin particles is not less than 0.3 parts by weight relative to 100 parts by weight of the expandable resin particles, a foamed molded product that can be provided with use of the expandable resin particles has a sufficient flame retardancy. (b) In a case where the content of the flame retarder in the expandable resin particles is not more than 1.5 parts by weight relative to 100 parts by weight of the expandable resin particles, a foamed molded product that can be provided with use of the expandable resin particles has a sufficient heat resistance.

The expandable resin particles preferably contains, on a surface thereof, an anti-blocking agent as a coating composition. In an expansion process for obtaining expanded particles from expandable resin particles, a state in which the obtained expanded particles bond together (also referred to as "blocking") may occur. The expandable resin particles that contain the anti-blocking agent on the surface thereof make it possible to easily prevent blocking.

Examples of the anti-blocking agent include (a) polysiloxane-based coating compositions such as methylphenylpolysiloxane, dimethylpolysiloxane, and diphenylpolysiloxane, and (b) fatty acid metal salts such as zinc stearate, calcium stearate, magnesium stearate, aluminum stearate, zinc oleate, magnesium oleate, zinc laurate, and calcium laurate. The anti-blocking agent is preferably a polysiloxane-based coating composition because the polysiloxane-based coating composition shows a great anti-blocking effect. The anti-blocking agent is preferably methylphenylpolysiloxane or diphenylpolysiloxane, and more preferably methylphenylpolysiloxane among the polysiloxane-based coating compositions because such a polysiloxane-based coating composition is considered to be difficult to be peeled off from the expandable resin particles.

(2-5. Physical properties)

(D2230/D1600)

In the present specification, "attenuated total reflection Fourier-transform infrared spectroscopy" may be referred to as "ATR-FTIR analysis", and "an infrared absorption spectrum obtained by ATR-FTIR analysis with respect to a surface" may be referred to as an "ATR-FTIR spectrum". "D2230/D1600 of expanded particles produced by expanding the present expandable resin particles at an expanding ratio of 22 times" means "a ratio between an absorbance at a wavelength of 2230 $cm^{-1}$ (D2230) and an absorbance at a wavelength of 1600 $cm^{-1}$ (D1600) in an ATR-FTIR spectrum of expanded particles produced by expanding the present expandable resin particles at an expanding ratio of 22 times".

Assume here that expanded particles for use in acquisition of an ATR-FTIR spectrum are obtained by treating the present expandable resin particles in order of the following (1) to (5): (1) the expandable resin particles are sieved to collect expandable resin particles having a particle diameter of 0.5 mm to 1.4 mm; (2) the collected expandable resin particles are introduced into a pressure-type expansion machine (e.g., "BHP" manufactured by Obiraki Industry Co., Ltd.); (3) then a temperature (expansion temperature) inside the expansion machine is set to 100°C to 104°C by blowing vapor into the expansion machine under a blowing vapor pressure of 0.08 MPa to 0.10 MPa and expanded particles are prepared with an internal pressure of the expansion machine in a range of 0.01 MPa to 0.02 MPa; (4) the expandable resin particles are heated at the expansion temperature so as to expand the expandable resin particles at an expanding ratio of 22 times to obtain expanded particles; and (5) then the obtained expanded particles are allowed to stand at 25°C for 12 hours to 24 hours so as to obtain expanded particles for use in acquisition of an ATR-FTIR spectrum.

Note here that the expanding ratio of the expanded particles is calculated by carrying out the following (1) to (3) in order: (1) 10 g of expanded particles are weighed out and put into a measuring cylinder of 1000 $cm^3$; (2) a volume of 10 g of the expanded particles is measured from a scale of the measuring cylinder; and (3) an expanding ratio of the expanded particles is calculated by the following equation:

$$\text{Expanding ratio } (cm^3/g) = \text{volume of expanded particles } (cm^3) / 10 \text{ g.}$$

In the present specification, the expanding ratio of the expanded particles is calculated by the above-described method, and therefore can also be referred to as a volume magnification.

In the ATR-FTIR spectrum, D2230 is derived from a carbon-nitrogen triple bond contained in the acrylonitrile unit, and D1600 is derived from a benzene ring contained in the styrene unit. Thus, the ratio between an absorbance at a wavelength of 2230 $cm^{-1}$ (D2230) and an absorbance at a wavelength of 1600 $cm^{-1}$ (D1600) (D2230/D1600) in the ATR-FTIR spectrum of expanded particles can also be said to be a ratio between the acrylonitrile unit and the styrene unit on a surface of expanded particles. It can be said that the ratio between the acrylonitrile unit and the styrene unit on the surface of the expanded particles is highly likely to be identical to a ratio between the acrylonitrile unit and the styrene unit on a surface of expandable resin particles of which the expanded particles are made. Thus, it can also be said that D2230/D1600 which is not less than 1.20 in the ATR-FTIR spectrum of expanded particles produced by expanding the present expandable resin particles at an expanding ratio of 22 times is highly likely to mean that D2230/D1600 in the ATR-FTIR spectrum of the expandable resin particles is not less than 1.20.

Since D2230/D1600 of expanded particles produced by expanding the present expandable resin particles at an expanding ratio of 22 times is not less than 1.20, the present expandable resin particles advantageously allow providing a foamed molded product in which a smaller amount of VOC is emitted. The reason for this is unclear but is inferred as below. Specifically, D2230/D1600 of expanded particles produced by expanding expandable resin particles at an expanding ratio of 22 times means that many acrylonitrile units are present on a surface of the expanded particles. As described earlier, the acrylonitrile unit makes binding force between polymer chains sufficiently strong. This makes it possible to remarkably enhance a gas barrier property. Thus, more acrylonitrile units that are present on a surface of expanded particles allow the surface of the expanded particles to have an excellent gas barrier property. As a result, it is inferred that a VOC in a foamed molded product obtained from the expanded particles is less likely to be emitted. Note that an embodiment of the present invention is not limited by such inference.

According to the present expandable resin particles, expanded particles produced by expanding the expandable resin particles at an expanding ratio of 22 times have D2230/D1600 of preferably not less than 1.30, more preferably not less than 1.40, more preferably not less than 1.50, more preferably not less than 1.60, more preferably not less than 1.70, even more preferably not less than 1.80, and particularly preferably not less than 1.90.

In an embodiment of the present invention, the ATR-FTIR spectrum of expanded particles can be measured with use of an FTIR device with which an ATR measurement device is connected. A method for measuring the ATR-FTIR spectrum will be described later in detail in Examples.

(VOC content in expandable resin particles)

In the present specification, a styrene and ethylbenzene content (i.e., VOC content) in expandable resin particles is represented by a weight ratio (ppm) based on the weight of the expandable resin particles. The present expandable resin particles have a styrene content of preferably less than 20 ppm and an ethylbenzene content of not more than 130 ppm. The styrene content in the present expandable resin particles is preferably not more than 10 ppm, more preferably not more than 5 ppm, and even more preferably 0 ppm, that is, not more than a detection limit in a measurement method which will be described later. The ethylbenzene content in the present expandable resin particles is more preferably not more than 120 ppm, more preferably not more than 110 ppm, and even more preferably not more than 100 ppm. The above arrangement allows a foamed molded product that can be provided with use of the expandable resin particles to reduce an amount of VOC to be emitted into the environment and thus have a reduced adverse effect on the human body.

Note here that the respective contents of styrene and ethylbenzene in the expandable resin particles are calculated by carrying out the following (1) to (4) in order: (1) 0.25 g of the expandable resin particles together with internal standard cyclopentanol are dissolved in 20 ml of methylene chloride; (2) a resulting solution is subjected to a gas chromatograph (GC-2014, manufactured by Shimadzu Corporation), and gas chromatography is carried out so that amounts of styrene and ethylbenzene that are contained in the solution are detected; (3) styrene or ethylbenzene together with internal standard cyclopentanol is dissolved in methylene chloride, a resulting solution is subjected to the gas chromatograph, and gas chromatography is carried out so that a calibration curve of styrene or ethylbenzene is obtained; and (4) from the calibration curve and each of the results of the gas chromatography carried out with respect to the solution, the weight of a styrene monomer and an ethylbenzene monomer that are contained in the solution, i.e., the expandable resin particles is calculated as a weight ratio (ppm) based on the weight of the expandable resin particles. Conditions for the gas chromatography are as follows.

Capillary column: Rtx-1, manufactured by GL Sciences Inc.
Column temperature condition: heating from 50°C to 80°C at a heating rate of at 3°C/min, then heating from 80°C to 180°C at a heating rate of 10°C/min
Carrier gas: helium

(Weight average molecular weight of expandable resin particles)

The present expandable resin particles have a weight average molecular weight of preferably 150,000 to 220,000, more preferably 160,000 to 220,000, even more preferably 170,000 to 220,000, and particularly preferably 180,000 to 210,000. (a) In a case where the weight average molecular weight of the expandable resin particles is not less than 150,000, a foamed molded product that can be provided with use of the expandable resin particles has a sufficient strength, a sufficient flame retardancy, and a sufficient heat resistance. (b) In a case where the weight average molecular weight of the expandable resin particles is not more than 220,000, the expandable resin particles have a good moldability. Examples of a method for measuring the weight average molecular weight of the expandable resin particles include a measurement method that is carried out with use of gel permeation chromatography (may be referred to as "GPC").

In production of the expandable resin particles, the base resin does not change in composition. In expanded particles produced with use of the expandable resin particles, the expandable resin particles change in structure but do not change in composition. Further, in a foamed molded product produced with use of the expanded particles produced with use of the expandable resin particles, the expanded particles change in structure but do not change in composition. Therefore, (i) types of structural units and (ii) contents of the structural units, the types and the contents each having been obtained from an analysis of the expandable resin particles, the expanded particles, or the foamed molded product, can be regarded as (i) types of structural units contained in the base resin of which the expandable resin particles, the expanded particles, or the foamed molded product is/are made and (ii) contents of the structural units, respectively. A weight average molecular weight obtained from an analysis of the base resin can be regarded as a weight average molecular weight of expandable resin particles obtained with use of the base resin. Furthermore, a weight average molecular weight obtained from an analysis of the expanded particles or the foamed molded product can be regarded as a weight average molecular weight of expandable resin particles of which the expanded particles or the foamed molded product is/are made.

A weight average molecular weight of the base resin, the expanded particles, or the foamed molded product can be obtained by carrying out measurement with use of gel permeation chromatography with respect to the base resin, the expanded particles, or the foamed molded product.

[3. Method for producing expandable resin particles]

A method for producing expandable resin particles in accordance with an embodiment of the present invention includes: a copolymerization step of copolymerizing a monomer mixture containing a styrene monomer and an acrylonitrile monomer to obtain a copolymer; and a blowing agent impregnation step of impregnating a blowing agent in the copolymer thus obtained, the copolymerization step further including (a) a feeding step of feeding, into a container, an initial monomer mixture containing the styrene monomer and a part of the acrylonitrile monomer, and (b) an addition step of adding a part of the acrylonitrile monomer to a reaction mixture after polymerization of the initial monomer mixture is initiated, in the copolymerization step, (a) the styrene monomer being used in a total amount of 80.0 parts by weight to 84.5 parts by weight and the acrylonitrile monomer being used in a total amount of 15.5 parts by weight to 20.0 parts by weight, and (b) the styrene monomer and the acrylonitrile monomer being used in a total amount of 100 parts by weight, and in the addition step, the part of the acrylonitrile monomer being added to the reaction mixture in an amount of 2.0 parts by weight to 5.0 parts by weight.

A "method for producing expandable resin particles in accordance with an embodiment of the present invention" may be hereinafter referred to as "the present production method".

With the above arrangement, the present production method allows providing expandable resin particles with use of which a foamed molded product in which a smaller amount of VOC is emitted can be provided. Specifically, the present production method allows providing expandable resin particles with use of which a foamed molded product in which styrene is emitted in an amount of less than 1.00 ppm, and ethylbenzene is emitted in an amount of less than 10.5 ppm can be provided. With the above arrangement, the present production method advantageously allows providing the expandable resin particles described in [2. Expandable resin particles]. In other words, the method for producing expandable resin particles in accordance with an embodiment of the present invention may be suitably used to produce the expandable resin particles described in [2. Expandable resin particles]. Note that the "copolymer" in the present production method corresponds to the "base resin" contained in the expandable resin particles described in [2. Expandable resin particles].

With the above arrangement, the present production method also advantageously allows providing expandable resin particles that have a reduced VOC content. The reason for this is unclear but is inferred as below. Specifically, it is inferred that the acrylonitrile monomer which is added to the reaction mixture after polymerization of the initial monomer mixture is initiated causes styrene contained in the reaction mixture to be easily consumed for a polymerization reaction. It is inferred that this results in obtainment of expandable resin particles in which styrene contained as a styrene monomer in the expandable resin particles without being consumed for the polymerization reaction, that is, styrene as a VOC is contained in a small amount. Note that an embodiment of the present invention is not limited by such inference.

The following will describe steps related to the present production method. Except for matters described in detail below, the description in [2. Expandable resin particles] is cited as appropriate. The present expandable resin particles, i.e., the expandable resin particles described in [2. Expandable resin particles], are preferably produced by the present production method, but may be alternatively produced by a method that is not the present production method. That is, a method for producing the present expandable resin particles is not limited to such an aspect of the present production method as described below.

(3-1. Copolymerization step)

The copolymerization step is a step of copolymerizing a monomer mixture containing a styrene monomer and an acrylonitrile monomer so as to prepare a copolymer having a structural unit derived from the styrene monomer and a structural unit derived from the acrylonitrile monomer.

A styrene monomer may contain a small amount of an ethylbenzene monomer which is used in the process of producing the styrene monomer. In the present specification, an amount of an ethylbenzene monomer contained in a styrene monomer is represented by a weight ratio (ppm) based on the weight of the styrene monomer. The styrene monomer used in the present production method preferably contains as small an amount of an ethylbenzene monomer as possible. The ethylbenzene monomer is contained in the styrene monomer in an amount of, for example, preferably not more than 130 ppm, more preferably not more than 120 ppm, more preferably not more than 110 ppm, and even more preferably not more than 100 ppm. The above arrangement allows reducing an ethylbenzene content in resulting expandable resin particles.

In the copolymerization step, (a) the styrene monomer is used in a total amount of 80.0 parts by weight to 84.5 parts by weight and the acrylonitrile monomer is used in a total amount of 15.5 parts by weight to 20.0 parts by weight, and (b) the styrene monomer and the acrylonitrile monomer are used in a total amount of 100 parts by weight. Note here that the "total amount in which the acrylonitrile monomer is used" includes the amount of a part of the acrylonitrile monomer contained in the initial monomer mixture in the feeding step and an amount of a part of the acrylonitrile monomer added to the reaction mixture in the addition step (described later).

In the copolymerization step, an alpha-methylstyrene monomer may be further used, that is, the monomer mixture may further contain the alpha-methylstyrene monomer.

A preferable aspect of a total amount of the styrene unit, the acrylonitrile monomer, and the alpha-methylstyrene monomer that are used in the copolymerization step is identical to a preferable aspect of the respective contents of the styrene unit, the acrylonitrile unit, and the alpha-methylstyrene unit in the base resin, described in (2-2. Base resin). Thus, as a preferable aspect of a total amount of the styrene unit, the acrylonitrile monomer, and the alpha-methylstyrene monomer that are used in the copolymerization step, an aspect described in (2-2. Base resin) can be employed by replacing the "monomer" with "unit", the "total amount used" with "contents".

In the copolymerization step, a method for copolymerizing the monomer mixture containing the styrene monomer and the acrylonitrile monomer is not particularly limited, and can be a conventionally known polymerization method. The copolymerization step is preferably a suspension polymerization method in which polymerization is carried out in an aqueous suspension. Generally, suspension polymerization is superior to mass polymerization in removal of heat of polymerization (i.e., heat release). The copolymerization step will be described below with reference to an example case in which the suspension polymerization method is employed.

In the present specification, "aqueous suspension" refers to a liquid (aqueous solution) in which resin particles, expandable resin particles, and/or a monomer liquid drop is/are dispersed in water or an aqueous solution with use of a stirrer or the like. In the aqueous suspension, (i) a surfactant and a monomer may be dissolved, or (ii) a dispersing agent, a polymerization initiator, a crosslinking agent, a plasticizing agent, a cell adjusting agent, a flame retarder, an auxiliary flame retarder, and the like each of which is insoluble in water may be dispersed together with a monomer. Note that the polymerization initiator, the crosslinking agent, the chain transfer agent, and the polymerization adjusting agent which are used in the copolymerization step constitute a part of a resulting copolymer.

In a case where a seeded suspension polymerization method is employed as a polymerization method, a monomer which is contained in resin particles serving as a seed is also included as a monomer component.

In the copolymerization step, a weight ratio of water in the aqueous suspension preferably ranges from 1.0/0.6 to 1.0/3.0 in terms of a ratio of a weight of the resulting copolymer to a weight of water.

In the copolymerization step, a dispersing agent may be used. Examples of the dispersing agent that may be used in the copolymerization step include (a) poorly water-soluble inorganic salts such as tricalcium phosphate, magnesium pyrophosphate, hydroxyapatite, and kaolin, and (b) water-soluble polymers such as polyvinyl alcohol, methyl cellulose, polyacrylamide, and polyvinylpyrrolidone. In a case where a poorly water-soluble inorganic salt is used as the dispersing agent, it is preferable to use an anionic surfactant such as $\alpha$-olefin sodium sulfonate or dodecylbenzene sodium sulfonate in combination with the poorly water-soluble inorganic salt (the dispersing agent) in order to achieve an increase in dispersion stability. Such a dispersing agent can be further added to the aqueous suspension as appropriate at any point in time during the copolymerization step.

The dispersing agent is used in a varying amount depending on a type of the dispersing agent. In a case where a poorly water-soluble inorganic salt is used as the dispersing agent, the dispersing agent is preferably used in an amount of not less than 0.1 parts by weight and not more than 1.5 parts by weight relative to 100 parts by weight of water. In a case where a water-soluble polymer is used as the dispersing agent, the dispersing agent is preferably used in an amount of not less than 30 ppm and not more than 100 ppm in the aqueous suspension. In a case where an anionic surfactant is used in combination with a poorly water-soluble inorganic salt, the anionic surfactant is preferably used in an amount of not less than 30 ppm and not more than 100 ppm in the aqueous suspension.

In the copolymerization step of the present production method, a chain transfer agent and a polymerization adjusting agent may be further used. Examples of the chain transfer agent include mercaptan-based compounds such as n-octylmercaptan, n-dodecylmercaptan, and t-dodecylmercaptan. Examples of the polymerization adjusting agent include $\alpha$-methylstyrene dimer, which is generally used for polymerization of an acrylonitrile-styrene-based resin, $\alpha$-methylstyrene dimer also contributes to adjustment of a weight average molecular weight of a copolymer, and therefore can also be said to be a chain transfer agent. The chain transfer agent primarily serves to adjust a weight average molecular weight of a copolymer. The polymerization adjusting agent primarily serves to adjust a polymerization speed.

In the copolymerization step, it is preferable to use $\alpha$-methylstyrene dimer as the chain transfer agent. With the above arrangement, (a) the polymerization speed and the weight average molecular weight of the copolymer are advantageously easily adjusted, and (b) a foamed molded product that can be provided with use of the expandable resin particles is advantageously less likely to generate any odor.

The chain transfer agent and the polymerization adjusting agent are used in the copolymerization step in a total amount of preferably not less than 0.1 parts by weight and not more than 0.6 parts by weight, more preferably not less than 0.2 parts by weight and not more than 0.5 parts by weight, and particularly preferably not less than 0.3 parts by weight and not more than 0.4 parts by weight, relative to 100 parts by weight of the monomer mixture, in terms of easily adjusting (a) the polymerization speed and (b) the weight average molecular weight of the copolymer. The inventors of the present invention found a surprising effect such that as compared with a conventional technique regarding acrylonitrile-containing expanded particles, the present production method allows the chain transfer agent and the polymerization adjusting agent to be used in a smaller total amount. The reason for this is unclear but is inferred as below. A reaction speed between an acrylonitrile monomer and a styrene monomer is higher than a reaction speed between a styrene monomer and a styrene monomer. As compared with a conventional technique regarding acrylonitrile unit-containing expanded particles, the present production method allows a further reduction in amount of the acrylonitrile monomer at the time of initiation of the polymerization reaction, i.e., amount of the acrylonitrile monomer in the initial monomer mixture during the feeding step. It is therefore inferred that the present production method makes it possible to reduce a total amount of the chain transfer agent and the polymerization adjusting agent that are used to achieve a desired polymerization speed and a desired weight average molecular weight. Note that an embodiment of the present invention is not limited by such inference.

(3-2. Feeding step)

The feeding step is a step of feeing, into a container, a mixture of monomers that is used at a time when copolymerization is initiated, i.e., the initial monomer mixture. In the feeding step, together with the initial monomer mixture, a dispersing agent, a polymerization initiator, a crosslinking agent, a plasticizing agent, a cell adjusting agent, a flame retarder, an auxiliary flame retarder, and the like may be fed into the container. The feeding step can also be said to be a step of preparing an aqueous suspension for initiating copolymerization.

The container can be a known polymerization container, e.g., a heat- and pressure-resistant vessel such as an autoclave.

In the feeding step, the initial monomer mixture does not contain all of the acrylonitrile monomer that is used in the copolymerization step, but contains a part of the acrylonitrile monomer that is used in the copolymerization step. In the feeding step, the part of the acrylonitrile monomer is contained in the initial monomer mixture in an amount of preferably 12.0 parts by weight to 18.0 parts by weight, more preferably 13.0 parts by weight to 17.0 parts by weight, and even more preferably 14.0 parts by weight to 16.0 parts by weight. With the above arrangement, it is possible to obtain expandable resin particles that are excellent in gas barrier property. This allows the expandable resin particles to provide a foamed molded product in which a smaller amount of VOC is emitted.

In the feeding step, the initial monomer mixture does not need to contain all of the styrene monomer that is used in the copolymerization step. The initial monomer mixture may contain a part of the styrene monomer that is used in the copolymerization step, and a part or all of the remaining styrene monomer may be added to the reaction mixture after polymerization of the initial monomer mixture is initiated, e.g., in the addition step.

A method for initiating polymerization (copolymerization) of the initial monomer mixture is not particularly limited. A copolymerization reaction may be initiated by, for example, heating, to a predetermined temperature, an aqueous suspension containing at least the initial monomer mixture and a polymerization initiator.

In order to initiate polymerization (copolymerization) of the initial monomer mixture, the copolymerization step may further include a polymerization initiator mixing step of mixing the initial monomer mixture and the polymerization initiator. A method for mixing the initial monomer mixture and the polymerization initiator is not particularly limited. Examples of the method for mixing the initial monomer mixture and the polymerization initiator include (a) a method in which after the feeding step, the polymerization initiator is added in the container containing the initial monomer mixture and the polymerization initiator and the initial monomer mixture are mixed, (b) a method in which during the feeding step, the initial monomer mixture is added in the container containing the polymerization initiator and the initial monomer mixture and the polymerization initiator are mixed, and (c) a method in which during the feeding step, the polymerization initiator and the initial monomer mixture are simultaneously added in the container and mixed. The expression "in the container" may mean, for example, "in the aqueous suspension in the container".

In order to initiate polymerization (copolymerization) of the initial monomer mixture, the copolymerization step may further include a heating step of heating the aqueous suspension containing the initial monomer mixture and the polymerization initiator. In the heating step, the aqueous suspension containing the initial monomer mixture and the polymerization initiator is heated to, for example, a polymerization temperature in a first polymerization step (described later).

(3-2. Addition step)

The copolymerization step further includes the addition step of after polymerization of the initial monomer mixture is initiated, adding, to the reaction mixture, the part of the acrylonitrile monomer that is used in the copolymerization step. With this arrangement, the present production method makes it possible to provide expandable resin particles with use of which expanded particles that have D2230/D1600 of not less than 1.20 can be provided, that is, to provide expandable resin particles which have a reduced VOC content and in which a smaller amount of VOC is emitted.

In the addition step, the part of the acrylonitrile monomer is added to the reaction mixture in an amount of preferably 2.0 parts by weight to 5.0 parts by weight, more preferably 2.5 parts by weight to 4.5 parts by weight, and even more preferably 3.0 parts by weight to 4.0 parts by weight. The above arrangement easily allows D2230/D1600 of expanded particles of resulting expandable resin particles to have a higher value. As a result, the resulting expandable resin particles advantageously allow providing a foamed molded product in which a further smaller amount of VOC is emitted.

In the addition step, the part of the acrylonitrile monomer which part is added to the reaction mixture may be all added to the reaction mixture at a time, or may be separated into smaller amounts and intermittently added to the reaction mixture. In the addition step, the "amount of the part of the acrylonitrile monomer which part is added to the reaction mixture" means a total amount of the acrylonitrile monomer that is not fed as the initial monomer mixture into the container during the feeding step and then is added to the reaction mixture during copolymerization.

The addition step is carried out at any point in time after a polymerization conversion rate reaches preferably 85%, more preferably 87%, even more preferably 88%, and particularly preferably 90%. The above arrangement easily allows D2230/D1600 of expanded particles produced by expanding resulting expandable resin particles at an expanding ratio of 22 times to have a higher value. As a result, the resulting expandable resin particles advantageously allow providing a foamed molded product in which a further smaller amount of VOC is emitted.

In order to obtain expandable resin particles that allow D2230/D1600 of expanded particles produced by expanding resulting expandable resin particles at an expanding ratio of 22 times to have a higher value, the addition step is preferably carried out at any point in time before the polymerization conversion rate reaches 100%. In order to obtain expandable resin particles with use of which a foamed molded product that is excellent in fusibility can be provided, the addition step is carried out at any point in time before the polymerization conversion rate reaches more preferably 98%, even more preferably 96%, and particularly preferably 94%.

Note here that the polymerization conversion rate of the monomer is calculated by carrying out the following (1) to (7) in order: (1) the reaction mixture (e.g., the aqueous suspension) in the container is filtered with filter paper (model No. 21150 (having a diameter of 150 mm), manufactured by ADVANTEC); (2) a residue obtained on the filter paper is collected and dried; (3) the residue thus dried (hereinafter also referred to as a "dried residue") together with internal standard cyclopentanol is dissolved in methylene chloride; (4) a resulting solution is subjected to a gas chromatograph (GC-2014, manufactured by Shimadzu Corporation), and gas chromatography is carried out so that an amount of the monomer in the solution is detected; (5) together with internal standard cyclopentanol, the monomer used in the copolymerization reaction is dissolved in methylene chloride, a resulting solution is subjected to the gas chromatograph, and gas chromatography is carried out so that a calibration curve of the monomer used in the copolymerization reaction is obtained; (6) from the calibration curve and a result of the gas chromatography carried out with respect to the solution, the weight of the monomer in the solution, i.e., the dried residue is calculated as a weight ratio (ppm) based on the weight of the dried residue; and (7) the polymerization conversion rate is calculated based on the equation below assuming that 10,000 ppm is 1% and with use of an obtained result (weight ratio (ppm) of the monomer in the dried residue).

Polymerization conversion rate (%) = 100 - (weight ratio (ppm) of monomer in dried residue / 10,000).

Conditions for the gas chromatography are as follows.

Capillary column: Rtx-1, manufactured by GL Sciences Inc.
Column temperature condition: heating from 50°C to 80°C at a heating rate of at 3°C/min, then heating from 80°C to 180°C at a heating rate of 10°C/min
Carrier gas: helium

(First polymerization step)

The copolymerization step is preferably carried out in two or more stages by changing a polymerization temperature. For convenience, two polymerization steps that differ in polymerization temperature are hereinafter referred to as the first polymerization step and a second polymerization step, respectively. In other words, it can also be said that the copolymerization step preferably includes the first polymerization step and the second polymerization step that differ in polymerization temperature and that are continuous. With the above arrangement, expandable resin particles that have a reduced VOC content (amount of VOC emission) can be advantageously easily obtained.

The first polymerization step is not particularly limited in temperature, polymerization time, and the like, provided that the first polymerization step differs from the second polymerization step in polymerization temperature.

The polymerization temperature in the first polymerization step is not particularly limited. The polymerization temperature in the first polymerization step is, for example, 85°C to 95°C, preferably 87°C to 93°C, more preferably 88°C to 92°C, and particularly preferably 89°C to 91°C. With the above arrangement, expandable resin particles that have an absorbance ratio D2230/D1600 of not less than 1.20, i.e., expandable resin particles that have a reduced VOC content (amount of VOC emission) can be advantageously easily obtained. Furthermore, with the above arrangement, an amount of decomposition of the polymerization initiator (e.g., a polymerization initiator (X) described later) can be adjusted in an optimum range. With this, (a) polymerization stability is enhanced due to easiness of adjustment of the polymerization speed (reaction speed), and (b) expandable resin particles in an appropriate molecular weight range can be easily obtained.

The polymerization time in the first polymerization step is not particularly limited. The polymerization time in the first polymerization step is, for example, 4 hours to 9 hours, preferably 5 hours to 8 hours, and particularly preferably 6 hours to 7 hours. With the above arrangement, both productivity and polymerization stability can be advantageously achieved.

In the first polymerization step, a polymerization initiator that has a ten-hour half-life temperature of not lower than 74°C and lower than 90°C (hereinafter also referred to as the "polymerization initiator (X)) is preferably used as at least a part of the polymerization initiator.

The polymerization initiator (X) is preferably mainly used as the polymerization initiator in the first polymerization step. The expression "mainly used" is described here. For example, "the polymerization initiator (X) is mainly used as the polymerization initiator in the first polymerization step" is intended to mean that more than 50% by weight of the polymerization initiator (100% by weight) that is used in the first polymerization step is the polymerization initiator (X). Note that the polymerization initiator (X) and another polymerization initiator (e.g., a polymerization initiator (Y) described later) that is not the polymerization initiator (X) may coexist in the first polymerization step. The terms "use/used" can be reworded as "utilize/utilized" or "consume/consumed".

In the first polymerization step, not less than 65% by weight, more preferably not less than 80% by weight, and particularly preferably not less than 95% by weight of the polymerization initiator (100% by weight) that is used in the first polymerization step is the polymerization initiator (X) .

Examples of the polymerization initiator (X) that has a ten-hour half-life temperature of not lower than 74°C and lower than 90°C include organic peroxides such as benzoyl peroxide (also known as dibenzoyl peroxide), ditoluoyl peroxide, toluoyl benzoyl peroxide, lauroyl peroxide, and di-t-butyl peroxy hexahydro terephthalate, and (b) azo compounds such as azobis isobutyronitrile and azobis dimethylvaleronitrile. Among these polymerization initiators, the polymerization initiator (X) is particularly preferably benzoyl peroxide because benzoyl peroxide facilitates reaction of acrylonitrile that can impart a gas barrier property. These polymerization initiators (X) may be used alone or in combination of two or more thereof. The polymerization initiator (X) can be suitably used in the first polymerization step.

In the first polymerization step, any of monofunctional polymerization initiators such as benzoyl peroxide, ditoluoyl peroxide, and toluoyl benzoyl peroxide is particularly preferably mainly used as the polymerization initiator (X). With the above arrangement, expandable resin particles that have an absorbance ratio D2230/D1600 of not less than 1.20, i.e., expandable resin particles that have a reduced VOC content (amount of VOC emission) can be advantageously easily obtained.

In the first polymerization step, the polymerization initiator containing the polymerization initiator (X) that has a ten-hour half-life temperature of not lower than 74°C and lower than 90°C is used, and the polymerization initiator (X) preferably contains benzoyl peroxide. In the first polymerization step, the polymerization initiator containing the polymerization initiator (X) is used, and preferably more than 50% by weight, more preferably not less than 65% by weight, even more preferably not less than 80% by weight, and particularly preferably not less than 95% by weight of benzoyl peroxide is contained in 100% by weight of the polymerization initiator (X). With the above arrangement, expandable resin particles that have an absorbance ratio D2230/D1600 of not less than 1.20, i.e., expandable resin particles that have a reduced VOC content (amount of VOC emission) can be advantageously easily obtained.

In the first polymerization step, it is preferable that (a) the polymerization initiator (X) be mainly used, (b) not less than 95% by weight of benzoyl peroxide be contained in 100% by weight of the polymerization initiator (X), (c) a polymerization reaction be carried out at a polymerization temperature of 85°C to 95°C, and (d) the polymerization reaction be carried out for 4 hours to 9 hours. With the above arrangement, (a) the polymerization reaction can be suitably controlled because the polymerization initiator (X) that is used in the first polymerization step is decomposed mainly in the first polymerization step, and (b) expandable resin particles that have a reduced VOC content (amount of VOC emission) can be easily obtained.

In the first polymerization step, the polymerization initiator that is the polymerization initiator (X) is mainly used, and the polymerization initiator (X) is used in an amount of preferably 0.08 parts by weight to 0.25 parts by weight, and more preferably 0.10 parts by weight to 0.20 parts by weight, relative to 100 parts by weight of the monomers. (a) In a case where the polymerization initiator (X) is used in an amount of not less than 0.08 parts by weight relative to 100 parts by weight of the monomers in the first polymerization step, polymerization sufficiently advantageously proceeds. (b) In a case where the polymerization initiator (X) is used in an amount of not more than 0.25 parts by weight relative to 100 parts by weight of the monomers in the first polymerization step, the polymerization reaction does not rapidly proceed, and polymerization is therefore easily controlled. In a case where the weight initiator (X) is used in an amount of not less than 0.10 parts by weight and not more than 0.20 parts by weight, resulting expandable resin particles have a weight average molecular weight of 170,000 to 220,000, so that expandable resin particles that have good quality can be obtained.

In the present production method, a weight average molecular weight of the copolymer can be adjusted by variously combining types and amounts of polymerization initiators and chain transfer agents, and a polymerization condition of the first polymerization step.

According to the present production method, the step of adding acrylonitrile (described earlier) is preferably carried out during the first polymerization step. The above arrangement easily allows D2230/D1600 of expanded particles produced by expanding resulting expandable resin particles at an expanding ratio of 22 times to have a higher value. As a result, the resulting expandable resin particles advantageously allow providing a foamed molded product in which a further smaller amount of VOC is emitted.

(Second polymerization step)

The second polymerization step is preferably carried out successively to the first polymerization at any point in time after the polymerization conversion rate reaches 90%. It can also be said that the second polymerization step is preferably carried out at any point in time after the polymerization conversion rate reaches not less than 90%. Furthermore, it can also be said that the second polymerization step is preferably initiated at any point in time after the polymerization conversion rate reaches 90% (or not less than 90%).

The polymerization temperature in the second polymerization step is not particularly limited provided that the polymerization temperature in the second polymerization step differs from the polymerization temperature in the first polymerization step. The polymerization temperature in the second polymerization step is, for example, 110°C to 120°C, preferably 110°C to 119°C, more preferably 110°C to 118°C, more preferably 111°C to 117°C, even more preferably 112°C to 116°C, and particularly preferably 113°C to 115°C. (a) In a case where the polymerization temperature in the second polymerization step is not lower than 110°C, it is possible to reduce a VOC content (particularly, styrene content) in resulting expandable resin particles. (b) In a case where the polymerization temperature in the second polymerization step is not higher than 120°C, a polymerization machine that is used in the copolymerization step does not have a too high internal pressure, and is not required to have a high level of pressure resistance, accordingly. This results in achievement of lower production cost such as no need for a heavily-equipped polymerization machine. That is, in a case where the polymerization temperature in the second polymerization step is in the above-described range, a VOC can be advantageously efficiently reduced at a pressure that is not more than an upper limit of an internal pressure of a common polymerization machine. The polymerization temperature in the second polymerization step is preferably higher than the polymerization temperature in the first polymerization step. This arrangement allows reducing a VOC content in resulting expandable resin particles.

The polymerization time in the second polymerization step is not particularly limited. The polymerization time in the second polymerization step is, for example, 3 hours to 8 hours, more preferably 3 hours to 7 hours, and particularly preferably 4 hours to 6 hours. (a) In a case where the polymerization time in the second polymerization step is not less than 3 hours, it is possible to reduce a VOC content (particularly, styrene content) in resulting expandable resin particles.

(b) In a case where the polymerization time in the second polymerization step is not more than 8 hours, a not too large amount of the auxiliary flame retarder (e.g., dicumyl peroxide) is decomposed, and an effect of the auxiliary flame retarder is sufficiently exhibited during burning of a foamed molded product, so that flame retardancy does not tend to deteriorate. That is, in a case where the polymerization time in the second polymerization step is in the above-described range, resulting expandable resin particles advantageously can reduce a VOC while maintaining a quality such as flame retardancy.

The polymerization time in the second polymerization step may be longer than 8 hours. The polymerization time in the second polymerization step may be, for example, 3 hours to 15 hours, 5 hours to 15 hours, 6 hours to 13 hours, 7 hours to 11 hours, or 8 hours to 9 hours. Expandable resin particles produced by a production method in which the polymerization time in the second polymerization step is in the above-described range is also an embodiment of the present invention.

In the second polymerization step, a polymerization initiator that has a ten-hour half-life temperature of not lower than 90°C and not higher than 100°C (hereinafter also referred to as the "polymerization initiator (Y)) is preferably used as at least a part of the polymerization initiator. In the second polymerization step, not less than 65% by weight, more preferably not less than 80% by weight, and particularly preferably not less than 95% by weight of the polymerization initiator (100% by weight) that is used (utilized or consumed) in the second polymerization step is the polymerization initiator (Y).

Examples of the polymerization initiator (Y) that has a ten-hour half-life temperature of not lower than 90°C and not higher than 100°C include t-butylperoxy isopropyl monocarbonate, t-butylperoxy-2-ethylhexyl monocarbonate, t-amylperoxy isopropyl monocarbonate, t-amylperoxy-2-ethylhexyl monocarbonate, 1,1-bis(t-butyl peroxy)cyclohexane, and 1,1-bis(t-butyl peroxy)-3,3,5-trimethylcyclohexane. These polymerization initiators (Y) may be used alone or in combination of two or more thereof. The polymerization initiator (Y) can be suitably used in the second polymerization step.

Note that 1,1-bis(t-butyl peroxy)-3,3,5-trimethylcyclohexane is cleaved in two stages. The ten-hour half-life temperature is 86°C when first stage cleavage occurs in 1,1-bis(t-butyl peroxy)-3,3,5-trimethylcyclohexane that has not been cleaved. When second stage cleavage occurs in an intermediate product produced after the first stage cleavage, the ten-hour half-life temperature is around 94°C, which is higher than the ten-hour half-life temperature at the first stage cleavage. As 1,1-bis(t-butyl peroxy)-3,3,5-trimethylcyclohexane, an end product produced after the second stage cleavage acts mainly in the second polymerization step. Thus, in the present specification, 1,1-bis(t-butyl peroxy)-3,3,5-trimethylcyclohexane is not regarded as the polymerization initiator (X) but is regarded as the polymerization initiator (Y).

The polymerization initiator (Y) is particularly preferably t-butylperoxy-2-ethylhexyl monocarbonate and/or t-amylperoxy-2-ethylhexyl monocarbonate because t-butylperoxy-2-ethylhexyl monocarbonate and t-amylperoxy-2-ethylhexyl monocarbonate each promote reaction between styrene and acrylonitrile that remain in expandable resin particles or an aqueous suspension.

In the second polymerization step, the polymerization initiator that is the polymerization initiator (Y) is mainly used, and the polymerization initiator (Y) is used in the second polymerization step in an amount of preferably 0.25 parts by weight to 0.90 parts by weight, and more preferably 0.28 parts by weight to 0.60 parts by weight, relative to 100 parts by weight of the monomers. In a case where the polymerization initiator (Y) is used in the second polymerization step in an amount in the above-described range, styrene and acrylonitrile that remain in expandable resin particles or an aqueous suspension tend to easily react with each other. Thus, a proportion of styreneacrylonitrile copolymers in a surface layer of expandable resin particles tends to increase. As a result, expandable resin particles that have an absorbance ratio D2230/D1600 of not less than 1.20, i.e., expandable resin particles that have a reduced VOC content (amount of VOC emission) can be advantageously easily obtained.

The second polymerization step may be carried out also as a blowing agent impregnation step described later, i.e., may be carried out in the presence of a blowing agent.

(3-3. Blowing agent impregnation step)

The blowing agent impregnation step can be carried out at any point in time, and may be carried out, for example, together with the second polymerization step or after the second polymerization step.

In the blowing agent impregnation step, by impregnating a blowing agent in the copolymer obtained in the copolymerization step, it is possible to obtain expandable resin particles themselves.

The blowing agent impregnation step is initiated by adding the blowing agent to the aqueous suspension, and a specific treatment temperature (also referred to as an "impregnation temperature") and a specific treatment time (also referred to as an "impregnation time") are not particularly limited.

A strength of binding force between polymer chains in the base resin contained in the expandable resin particles is in inverse proportion to an efficiency of impregnation of the blowing agent in the copolymer during production of the expandable resin particles. The present production method can provide expandable resin particles that contain a base resin having a strong binding force between polymer chains. Thus, in order to sufficiently impregnate the blowing agent in the copolymer, the impregnation temperature in the blowing agent impregnation step is preferably 110°C to 120°C, more preferably 111°C to 119°C, even more preferably 112°C to 118°C, and particularly preferably 114°C to 116°C. In order to sufficiently impregnate the blowing agent in the copolymer, the impregnation time in the blowing agent impregnation step is preferably 3 hours to 8 hours, more preferably 3 hours to 7 hours, and particularly preferably 4 hours to 6 hours. In a case where the second polymerization step is carried out also as the blowing agent impregnation step, i.e., in a case where the second polymerization step and the blowing agent impregnation step are simultaneously carried out, the polymerization temperature in the second polymerization step can be said to be the impregnation temperature in the blowing agent impregnation step, and the polymerization time in the second polymerization step can be said to be the impregnation time in the blowing agent impregnation step.

(3-4. Drying step)

The present production method preferably further includes, after the blowing agent impregnation step, a drying step of carrying out a drying treatment with respect to the expandable resin particles. The expandable resin particles are obtained while being dispersed in the aqueous suspension. As such, in a case where the present production method includes the drying step, resulting expandable resin particles can be suitably used to, for example, produce expanded particles.

In the drying step, the drying treatment can be carried out with respect to the expandable resin particles by a method that is exemplified by, but not particularly limited to, an agitated trough or cylindrical dryer, a box-type or band-type through-flow dryer, and a fluidized-bed dryer.

The drying treatment in the drying step is carried out preferably at a temperature not higher than an expansion temperature of the expandable resin particles, and more preferably at 30°C to 55°C in terms of productivity. Adjusting the temperature at which the drying treatment is carried out (also referred to as a "drying treatment temperature") allows adjusting a water content of resulting expandable resin particles. In a case where the drying treatment temperature is not lower than 30°C, resulting expanded particles do not have a too high water content. This makes it possible to prevent expanded particles that can be provided with use of the expandable resin particles from having fine cells and to reduce an amount of VOC emission in the expanded particles. In a case where the drying treatment temperature is not higher than 55°C, resulting expanded particles do not have a too low water content. This does not cause deterioration in flame retardancy in a foamed molded product that can be provided with use of the expandable resin particles.

[4. Expanded particles]

The expandable resin particles can be made into expanded particles by a common expansion method. Specific examples of the expansion method include a method in which the following (1) to (3) are sequentially carried out: (1) the expandable resin particles are placed in a container provided with a stirrer, and (2) the expandable resin particles are heated with use of a heat source such as steam, so that (3) the expandable resin particles are expanded until a desired expanding ratio is achieved, so as to obtain expanded particles. Note that the expanded particles may be referred to as "pre-expanded particles", and an expansion method for obtaining pre-expanded particles may be referred to as a "pre-expansion method", accordingly.

A device that is used to expand the expandable resin particles and an expansion condition are not particularly limited provided that the device and the expansion condition are set as appropriate in accordance with, for example, a composition of the expandable resin particles themselves and a desired expanding ratio.

Expanded particles produced by expanding the expandable resin particles in accordance with an embodiment of the present invention are also an embodiment of the present invention. "Expanded particles in accordance with an embodiment of the present invention" may be hereinafter referred to as "the present expanded particles". The present expanded particles allow providing a foamed molded product in which a smaller amount of VOC is emitted, i.e., a foamed molded product that has high productivity.

The present expanded particles may be arranged as follows. Specifically, expanded particles in accordance with another embodiment of the present invention are expanded particles produced by expanding expandable resin particles, the expandable resin particles containing: a base resin containing, as structural units, a styrene unit and an acrylonitrile unit; and a blowing agent, in the base resin, (a) a content of the styrene unit being 80.0 parts by weight to 84.5 parts by weight and a content of the acrylonitrile unit being 15.5 parts by weight to 20.0 parts by weight, and (b) a total content of the styrene unit and the acrylonitrile unit being 100 parts by weight, and the expanded particles having D2230/D1600 of not less than 1.20, where the D2230/D1600 is a ratio between an absorbance at a wavelength of 2230 cm$^{-1}$ (D2230) and an absorbance at a wavelength of 1600 cm$^{-1}$ (D1600) in an infrared absorption spectrum obtained by attenuated total reflection Fourier-transform infrared spectroscopy with respect to a surface of the expanded particles.

The present expanded particles may be arranged as follows. Specifically, the expanded particles in accordance with another embodiment of the present invention is arranged such that (a) the expanded particles contain, as structural units, a styrene unit and an acrylonitrile unit, (b) a content of the styrene unit is 80.0 parts by weight to 84.5 parts by weight and a content of the acrylonitrile unit is 15.5 parts by weight to 20.0 parts by weight, (c) a total content of the styrene unit and the acrylonitrile unit is 100 parts by weight, and (d) the expanded particles have D2230/D1600 of not less than 1.20, where the D2230/D1600 is a ratio between an absorbance at a wavelength of 2230 cm$^{-1}$ (D2230) and an absorbance at a wavelength of 1600 cm$^{-1}$ (D1600) in an infrared absorption spectrum obtained by attenuated total reflection Fourier-transform infrared spectroscopy with respect to a surface of the expanded particles.

In the present specification, a styrene and ethylbenzene content (i.e., VOC content) in expanded particles is represented by a weight ratio (ppm) based on the weight of the expanded particles. A styrene (styrene monomer) content in the present expanded particles is preferably not more than 20 ppm, more preferably not more than 10 ppm, even more preferably not more than 5 ppm, and still more preferably not more than 0 ppm, that is, not more than a detection limit in a measurement method which will be described later. An ethylbenzene (ethylbenzene monomer) content in the present expanded particles is preferably not more than 130 ppm, more preferably not more than 120 ppm, even more preferably not more than 110 ppm, and still more preferably not more than 100 ppm. The above arrangement allows a foamed molded product that can be provided with use of the expanded particles to reduce an amount of VOC emitted into the environment and thus have a reduced adverse effect on the human body.

Note that the styrene and ethylbenzene content (i.e., VOC content) in the expanded particles can be measured by a method that is identical to the method for measuring the styrene and ethylbenzene content in the expandable resin particles, except that the expanded particles are used instead of the expandable resin particles.

[5. Foamed molded product]

The expanded particles can be molded into a foamed molded product by a common in-mold molding method. Specific examples of the in-mold molding method include a method in which the expanded particles are filled into a mold that can be closed but cannot be sealed, and the expanded particles are molded into a foamed molded product by being fused and heated with use of steam.

A device that is used to carry out in-mold foam molding and an in-mold foam molding condition are not particularly limited provided that the device and the in-mold foam molding condition are set as appropriate in accordance with, for example, a composition of the expandable resin particles themselves and a desired expanding ratio.

A foamed molded product produced by carrying out in-mold molding with respect to the expandable resin particles in accordance with an embodiment of the present invention is also an embodiment of the present invention. A "foamed molded product in accordance with an embodiment of the present invention" may be hereinafter referred to as "the present foamed molded product". The present foamed molded product advantageously has a smaller amount of VOC emission.

In the present specification, an amount of emission of styrene and ethylbenzene in a foamed molded product is represented by a weight ratio (ppm) based on the weight of the foamed molded product. In the present foamed molded product, styrene is preferably emitted in an amount of less than 1.00 ppm, and ethylbenzene is preferably emitted in an amount of less than 10.5 ppm. Note here that the amount in which styrene is emitted and the amount in which ethylbenzene is emitted are each a value obtained by representing, by a weight ratio (ppm) on the basis of the weight of the foamed molded product, respective amounts (weights) of emission of styrene and benzene that are released into a container having a volume of 20 ml when 0.025 g of the foamed molded product is allowed to stand in the container at 60°C for 2 hours. In the present foamed molded product, styrene is emitted in an amount of more preferably not more than 0.90 ppm, more preferably not more than 0.80 ppm, more preferably not more than 0.70 ppm, even more preferably not more than 0.60 ppm, and particularly preferably not more than 0.50 ppm. In the present foamed molded product, ethylbenzene is emitted in an amount of more preferably not more than 10.0 ppm, more preferably not more than 9.0 ppm, more preferably not more than 8.0 ppm, more preferably not more than 7.0 ppm, even more preferably not more than 6.0 ppm, and particularly preferably not more than 5.0 ppm. In a case where styrene and ethylbenzene are emitted in the amounts in the above-described respective ranges in the present foamed molded product, the foamed molded product is advantageously unlikely to have an adverse effect, such as sick house syndrome, on a human body when used as an automobile interior material or an insulating material for a building material.

The amounts of emission of styrene and ethylbenzene (i.e., VOC emission) from the foamed molded product are calculated by carrying out the following (1) to (7) in order: (1) 0.025 g of a foamed molded product is prepared; (2) the foamed molded product is placed in a pressure-resistant glass container having a volume of 20 ml; (3) the pressure-resistant glass container is set in Head Space Sampler (HS-10 manufactured by Shimadzu Corporation) connected to a gas chromatograph (GC-2014 manufactured by Shimadzu Corporation); (4) the pressure-resistant glass container is allowed to stand in the HS-10 at 60°C for 2 hours; (5) after 2 hours have passed, the gas chromatograph (GC-2014 manufactured by Shimadzu Corporation) is used to analyze gas in the pressure-resistant glass container and detect amounts of styrene and ethylbenzene that are contained in the air; (6) styrene or ethylbenzene together with internal standard cyclopentanol is dissolved in methylene chloride, a resulting solution is subjected to the gas chromatograph, and gas chromatography is carried out so that a calibration curve of styrene or ethylbenzene is obtained; and (7) from the calibration curve and each of the results of the gas chromatography carried out with respect to the air in the pressure-resistant glass container, the weight of styrene and ethylbenzene that have been emitted is calculated as a weight ratio (ppm) based on the weight of the foamed molded product.

Conditions for the gas chromatography are as follows.

Capillary column: Rtx-1, manufactured by GL Sciences Inc.
Column temperature condition: heating from 50°C to 80°C at a heating rate of at 3°C/min, then heating from 80°C to 180°C at a heating rate of 10°C/min
Carrier gas: helium

The present foamed molded product is preferably a foamed molded product produced with use of expanded particles which have been produced with use of (i) the present expandable resin particles described in [2. Expandable resin particles] or (ii) expandable resin particles produced with use of the present production method described in [3. Method for producing expandable resin particles]. The present foamed molded product is preferably a foamed molded product produced with use of the present expanded particles described in [4. Expanded particles].

The present foamed molded product is preferably excellent in heat resistance. For example, in a case where the present foamed molded product is used as a heat insulating material or as a material of a part of an automotive member which part is exposed to sunlight, the present foamed molded product is preferably less deformed when used at a temperature of not lower than 90°C. Specifically, in a case where the foamed molded product that has an expanding ratio of 20 times is allowed to stand at 90°C for 168 hours, a rate of dimensional change of the foamed molded product which change is observed before and after the foamed molded product is allowed to stand is preferably -0.4% to 0.4%, more preferably -0.35% to 0.35%, even more preferably -0.3% to 0.3%, and particularly preferably -0.25% to 0.25%.

The present foamed molded product has a surface layer having an average chord length of not less than 50 pm and less than 100 pm, more preferably 50 pm to 90 pm, even more preferably 50 pm to 80 pm, and particularly preferably 60 pm to 80 pm. In a case where an average cell diameter is not less than 50 pm, the following results (a) to (c) are obtained. (a) A cell film has a sufficient thickness, so that the foamed molded product undergoes a smaller dimensional change in response to temperature. (b) An amount of VOC emission and an amount of total VOC emission can be reduced. (c) The cell film, which has a sufficient thickness, is not melted by pressurized steam during in-mold molding, so that the foamed molded product has a good surface property. In a case where the cell film is thin, the foamed molded product may expand in an environment at not lower than 90°C and consequently have poor dimensional stability. Expansion of the foamed molded product in a high temperature environment may be referred to as "tertiary expansion". In a case where the average cell diameter is less than 100 pm, the foamed molded product has a good surface property.

In the present specification, the "average chord length of the surface layer" refers to an average chord length of expanded particles that are collinear on a cross section of the surface layer of the foamed molded product. The average chord length is a value measured in accordance with ASTM-D-2842-97 with use of a photograph obtained by projecting the cross section of the foamed molded product. It is assumed that the average chord length is an average of respective chord lengths of 10 expanded particles that are collinear on the cross section of the surface layer of the foamed molded product and that are arbitrarily selected in the photograph obtained by projecting the cross section of the foamed molded product, the chord lengths being measured in the photograph. A method for measuring the average chord length of the surface layer will be described later in detail in Examples.

The present foamed molded product has an expanding ratio of preferably not less than 5 times and less than 40 times, more preferably 10 times to 35 times, even more preferably 15 times to 30 times, and particularly preferably 20 times to 25 times. (a) The foamed molded product that has an expanding ratio of not less than 5 times is advantageously lightweight. (b) The foamed molded product that has an expanding ratio of less than 40 times advantageously has an excellent strength.

Note here that the expanding ratio of the foamed molded product is calculated by carrying out the following (1) to (3) in order: (1) dimensions of the foamed molded product are measured so that a volume of the foamed molded product is calculated; (2) the weight of the foamed molded product is measured; and (3) the expanding ratio of the foamed molded product is calculated by the following equation.

$$\text{Expanding ratio } (cm^3/g) = \text{volume of foamed molded product } (cm^3) / \text{weight of foamed molded product } (g)$$

Specifically, embodiments of the present invention include the following.

[1] Expandable resin particles containing: a base resin containing, as structural units, a styrene unit and an acrylonitrile unit; and a blowing agent, in the base resin, (a) a content of the styrene unit being 80.0 parts by weight to 84.5 parts by weight and a content of the acrylonitrile unit being 15.5 parts by weight to 20.0 parts by weight, and (b) a total content of the styrene unit and the acrylonitrile unit being 100 parts by weight, and expanded particles having D2230/D1600 of not less than 1.20, the expanded particles being produced by expanding the expandable resin particles at an expanding ratio of 22 times, where the D2230/D1600 is a ratio between an absorbance at a wavelength of 2230 cm$^{-1}$ (D2230) and an absorbance at a wavelength of 1600 cm$^{-1}$ (D1600) in an infrared absorption spectrum obtained by attenuated total reflection Fourier-transform infrared spectroscopy with respect to a surface of the expanded particles.

[2] The expandable resin particles recited in [1], wherein the expandable resin particles have a styrene content of less than 20 ppm and an ethylbenzene content of not more than 130 ppm.

[3] Expanded particles produced by expanding expandable resin particles recited in [1] or [2].

[4] A foamed molded product produced by carrying out in-mold molding with respect to expanded particles recited in [3].

[5] The foamed molded product recited in [4], wherein styrene is emitted in an amount of less than 1.00 ppm, and ethylbenzene is emitted in an amount of less than 10.5 ppm.

[6] The foamed molded product recited in [4] or [5], wherein the foamed molded product has an expanding ratio of not less than 5 times and less than 40 times.

[7] A method for producing expandable resin particles, including: a copolymerization step of copolymerizing a monomer mixture containing a styrene monomer and an acrylonitrile monomer to obtain a copolymer; and a blowing agent impregnation step of impregnating a blowing agent in the copolymer thus obtained, the copolymerization step further including (a) a feeding step of feeding, into a container, an initial monomer mixture containing the styrene monomer and a part of the acrylonitrile monomer, and (b) an addition step of adding a part of the acrylonitrile monomer to a reaction mixture after polymerization of the initial monomer mixture is initiated, in the copolymerization step, (a) the styrene monomer being used in a total amount of 80.0 parts by weight to 84.5 parts by weight and the acrylonitrile monomer being used in a total amount of 15.5 parts by weight to 20.0 parts by weight, and (b) the styrene monomer and the acrylonitrile monomer being used in a total amount of 100 parts by weight, and in the addition step, the part of the acrylonitrile monomer being added to the reaction mixture in an amount of 2.0 parts by weight to 5.0 parts by weight.

[8] The method as recited in [7], wherein the addition step is carried out at any point in time after a polymerization conversion rate reaches 85%.

[9] The method recited in [7] or [8], wherein in the feeding step, the part of the acrylonitrile monomer is contained in the initial monomer mixture in an amount of 12.0 parts by weight to 18.0 parts by weight.

Examples

The following will show Examples and Comparative Examples. However, an aspect of the present invention is not limited to them.

The following polymerization initiators, flame retarders, auxiliary flame retarders, chain transfer agents, and plasticizing agents were used in Examples and Comparative Examples.

Polymerization initiator (X):
benzoyl peroxide (NYPER BW, manufactured by NOF CORPORATION) (ten-hour half-life temperature: 74°C);
Polymerization initiator (Y):

t-butylperoxy-2-ethylhexyl monocarbonate (PERBUTYL E, manufactured by NOF CORPORATION) (ten-hour half-life temperature: 99°C); and
1,1-bis(t-butylperoxy)-3,3,5-trimethylcyclohexane (manufactured by ARKEMA Yoshitomi, Ltd.) (ten-hour half-life temperature: 86°C)

Flame retarder:

tetrabromobisphenol A-bis(2,3-dibromo-2-methylpropyl)ether (Pyro-Guard SR-130, manufactured by Dai-ichi Kogyo Seiyaku Co., Ltd.); and
hexabromocyclododecane (HBCD)

Auxiliary flame retarder:

dicumyl peroxide (PERCUMYL D, manufactured by NOF CORPORATION); and
2,3-dimethyl-2,3-diphenylbutane (NOFMER BC, manufactured by NOF CORPORATION)

Chain transfer agent:
α-methylstyrene dimer (MSD, manufactured by NOF CORPORATION)
Plasticizing agent:
coconut oil

(Method for producing macro monomer)

A macro monomer used in Comparative Example 6 was produced in accordance with a method disclosed in Production Example 2 and Example 2 of Japanese Patent Application Publication Tokukai No. 2004-203932. Specifically, the macro monomer was produced as described below.

Various measurements and evaluations were carried out in Examples and Comparative Examples by a method as described below. Note that "parts" and "percentages", which are based on the weight unless otherwise noted, are intended to mean "parts by weight" and "percentages by weight", respectively.

(Method for measuring polymerization conversion rate)

A polymerization conversion rate of a monomer was calculated by carrying out the following (1) to (7) in order: (1) a reaction mixture (e.g., the aqueous suspension) in a container was filtered with filter paper (model No. 21150 (having a diameter of 150 mm), manufactured by ADVANTEC); (2) a residue obtained on the filter paper was collected and dried; (3) the residue thus dried (hereinafter also referred to as a "dried residue") together with internal standard cyclopentanol was dissolved in methylene chloride; (4) a resulting solution was subjected to a gas chromatograph (GC-2014, manufactured by Shimadzu Corporation), and gas chromatography was carried out so that an amount of the monomer in the solution was detected; (5) together with internal standard cyclopentanol, the monomer used in a copolymerization reaction was dissolved in methylene chloride, a resulting solution was subjected to the gas chromatograph, and gas chromatography was carried out so that a calibration curve of the monomer used in the copolymerization reaction was obtained; (6) from the calibration curve and a result of the gas chromatography carried out with respect to the solution, the weight of the monomer in the solution, i.e., the dried residue was calculated as a weight ratio (ppm) based on the weight of the dried residue; and (7) the polymerization conversion rate was calculated based on the equation below assuming that 10,000 ppm was 1% and with use of an obtained result (weight ratio (ppm) of the monomer in the dried residue).

$$\text{Polymerization conversion rate (\%)} = 100 - (\text{weight ratio (ppm) of monomer in dried residue} / 10{,}000).$$

Conditions for the gas chromatography were as follows.

Capillary column: Rtx-1, manufactured by GL Sciences Inc.
Column temperature condition: heating from 50°C to 80°C at a heating rate of at 3°C/min, then heating from 80°C to 180°C at a heating rate of 10°C/min
Carrier gas: helium

(Method for measuring weight average molecular weight (Mw) of expandable resin particles)

A sample was prepared by dissolving 0.02 g of expandable resin particles in 20 cc of tetrahydrofuran. The sample was subjected to gel permeation chromatography (GPC) (HLC-8020, manufactured by TOSOH CORPORATION, column: TSKgel Super HZM-H, column temperature: 40°C, flow rate: 0.35 ml/ 1 min), and a weight average molecular weight (Mw) of the expandable resin particles was measured. The weight average molecular weight was calculated as a standard polystyrene equivalent molecular weight. Obtained results (weight average molecular weight (Mw)) are shown in Table 3.

(Method for measuring respective contents of styrene and ethylbenzene in expandable resin particles)

Respective contents of styrene and ethylbenzene in the expandable resin particles were calculated by carrying out the following (1) to (4) in order: (1) 0.25 g of the expandable resin particles together with internal standard cyclopentanol were dissolved in 20 ml of methylene chloride; (2) a resulting solution was subjected to a gas chromatograph (GC-2014, manufactured by Shimadzu Corporation), and gas chromatography was carried out so that amounts of styrene and ethylbenzene that were contained in the solution were detected; (3) styrene or ethylbenzene together with internal standard cyclopentanol was dissolved in methylene chloride, a resulting solution was subjected to the gas chromatograph, and gas chromatography was carried out so that a calibration curve of styrene or ethylbenzene was obtained; and (4) from the calibration curve and each of the results of the gas chromatography carried out with respect to the solution, the weight of a styrene monomer and an ethylbenzene monomer that were contained in the solution, i.e., the expandable resin particles was calculated as a weight ratio (ppm) based on the weight of the expandable resin particles. Obtained results are shown in Table 3.

Conditions for the gas chromatography were as follows.

Capillary column: Rtx-1, manufactured by GL Sciences Inc.
Column temperature condition: heating from 50°C to 80°C at a heating rate of at 3°C/min, then heating from 80°C to 180°C at a heating rate of 10°C/min
Carrier gas: helium

(Method for producing expanded particles)

Expanded particles were obtained by processing expandable resin particles obtained in Examples and Comparative Examples in order of the following (1) to (5):

(1) the expandable resin particles were sieved to collect expandable resin particles having a particle diameter of 0.5 mm to 1.4 mm; (2) the collected expandable resin particles were introduced into a pressure-type expansion machine (e.g., "BHP" manufactured by Obiraki Industry Co., Ltd.); (2) then a temperature (expansion temperature) inside the expansion machine was set to 100°C to 104°C by blowing vapor into the expansion machine under a blowing vapor pressure of 0.08 MPa to 0.10 MPa and expanded particles were prepared with an internal pressure of the expansion machine in a range of 0.01 MPa to 0.02 MPa; (3) the expandable resin particles were heated at the expansion temperature so as to expand the expandable resin particles at an expanding ratio of 22 times or 42 times to obtain expanded particles; and (4) then the obtained expanded particles were allowed to stand at 25°C for 12 hours to 24 hours.

An expanding ratio, a blocking property, and D2230/D1600 of expanded particles thus obtained were measured and evaluated by the following method. Note that D2230/D1600 was measured only for the expanded particles having an expanding ratio of 22 times.

(Method for measuring expanding ratio of expanded particles)

An expanding ratio of the expanded particles was calculated by carrying out the following (1) to (3) in order: (1) 10 g of expanded particles were weighed out and put into a measuring cylinder of 1000 cm$^3$; (2) a volume of 10 g of the expanded particles was measured from a scale of the measuring cylinder; and (3) an expanding ratio of the expanded particles was calculated by the following equation:

$$\text{Expanding ratio (cm}^3/\text{g}) = \text{volume of expanded particles (cm}^3) / 10 \text{ g.}$$

(Method for measuring and evaluating blocking)

An amount of blocking is an amount of a mass produced by bonding of expanded particles in a pre-expansion machine during production of expanded particles from expandable resin particles by the above-described method. A larger amount of blocking causes a failure in filling of expanded particles during an in-mold molding process carried out with use of expanded particles. Thus, a smaller amount of blocking is better.

A total amount of the expanded particles obtained by the above-described method were placed on a metal gauze having a mesh interval of 1 cm and was sieved through the metal gauze so as to pass through the metal gauze. A weight of a mass of the expanded particles remaining on the metal gauze was measured, and an amount of blocking was calculated by the following equation:

$$\text{Amount of blocking (\%)} = \text{weight of mass of expanded}$$

$$\text{particles / weight of total amount of expanded particles} \times$$

$$100$$

The blocking property was determined from the calculated amount of blocking on the basis of the following criteria: Obtained results (blocking property) are shown in Table 3.

Good (G): less than 0.05%
Acceptable (A): less than 0.01% and not less than 0.05% Poor (P): not less than 0.1%

(Method for measuring D2230/D1600 of expanded particles)

From the expanded particles obtained as described earlier, 10 expanded particles were arbitrarily collected. ATR-FTIR analysis was carried out with respect to respective surfaces of those 10 expanded particles under the following condition so that an infrared absorption spectrum was obtained.

Device: device obtained by connecting a single attenuated total reflection (ATR) measurement device [MIRacle, manufactured by PIKE Technologies] with FTIR [FTIR-8400S, manufactured by Shimadzu Corporation]
ATR prism (high refractive index crystal seed): zinc selenide (ZnSe)
Incidence angle: 45°
Measurement range: $4000\text{cm}^{-1}$ to $600\text{cm}^{-1}$
Detector: DLATGS
Penetration depth: 1.66
Number of times of reflection: once
Resolution: $4\ \text{cm}^{-1}$
Number of integrations: 20 times
Other: An infrared absorption spectrum measured without any contact with a sample was used as a background to carry out a process not involved in a measurement spectrum.

In the ATR-FTIR analysis, a degree of adhesion between a sample and high refractive index crystal changes an intensity of an infrared absorption spectrum obtained in the measurement. Thus, in order to achieve an absorbance at $1600\ \text{cm}^{-1}$ of 0.05 to 0.10, the measurement was carried out by adjusting the degree of adhesion between the sample and the high refractive index crystal.
Note here that the measurement with respect to the surfaces of the expanded particles was carried out with the surfaces of the expanded particles directly adhered to an ATR prism.
From the infrared absorption spectrum obtained as described above, an absorbance ratio (D2230/D1600) between an absorbance at $2230\ \text{cm}^{-1}$ (D2230) and an absorbance at $1600\ \text{cm}^{-1}$ (D1600) was calculated. The ATR-FTIR analysis was carried out with respect to the respective surfaces of the 10 arbitrary expanded particles so that an infrared absorption spectrum was obtained. Thus, 10 results of the absorbance ratio (D2230/D1600) were obtained accordingly. A minimum absorbance ratio and a maximum absorbance ratio out of 10 absorbance ratios (D2230/D1600) were excluded. An arithmetical mean of the remaining 8 absorbance ratios was regarded as D2230/D1600 of expanded particles produced by expanding resulting expandable resin particles at an expanding ratio of 22 times. Obtained results are shown in Table 3.
Examples 4 and 6 are identical to Example 5 until production of expandable resin particles, and are different from Example 5 during or after production of expanded particles with use of resulting expandable resin particles. That is, expandable resin particles of Examples 4 and 6 are identical to expandable resin particles of Example 5, and Examples 4 and 6 are different from Example 5 in expanded particle and in foamed molded product. Thus, since D2230/D1600 of expanded particles produced by expanding the expandable resin particles of Examples 4 and 6 at an expanding ratio of 22 times is identical to D2230/D1600 of Example 5, D2230/D1600 of Examples 4 and 6 are omitted and expressed as "-" in Table 3.
A method for producing a foamed molded product is as described below.

(Method for producing foamed molded product)

A molding machine "KR-57, manufactured by DAISEN Co., Ltd." was used to subject resulting expanded particles to in-mold molding at a blowing vapor pressure of 0.05 MPa to 0.08 MPa and for a heating time of 10 seconds to 20 seconds, so that a plate-like foamed molded product was obtained that has an expanding ratio (volume magnification) of 20 times or 40 times and that has a length of 400 mm, a width of 350 mm, and a thickness of 20 mm.

An expanding ratio, amounts of emission of styrene and ethylbenzene, and an average chord length and heat resistance of a surface layer of the foamed molded product thus obtained were evaluated by the following method.

(Method for measuring expanding ratio of foamed molded product)

An expanding ratio of the foamed molded product was calculated by carrying out the following (1) to (3) in order: (1) dimensions of the foamed molded product were measured so that a volume of the foamed molded product was calculated; (2) the weight of the foamed molded product was measured; and (3) the expanding ratio of the foamed molded product is calculated by the following equation.

$$\text{Expanding ratio } (cm^3/g) = \text{volume of foamed molded product } (cm^3) / \text{weight of foamed molded product } (g)$$

(Method for measuring amounts of emission of styrene and ethylbenzene from foamed molded product)

The amounts of emission of styrene and ethylbenzene (i.e., VOC emission) from the foamed molded product were calculated by carrying out the following (1) to (7) in order: (1) 0.025 g of a foamed molded product was prepared; (2) the foamed molded product was placed in a pressure-resistant glass container having a volume of 20 ml; (3) the pressure-resistant glass container was set in Head Space Sampler (HS-10 manufactured by Shimadzu Corporation) connected to a gas chromatograph (GC-2014 manufactured by Shimadzu Corporation); (4) the pressure-resistant glass container was allowed to stand in the HS-10 at 60°C for 2 hours; (5) after 2 hours had passed, the gas chromatograph (GC-2014 manufactured by Shimadzu Corporation) was used to analyze gas in the pressure-resistant glass container and detect amounts of styrene and ethylbenzene that were contained in the air; (6) styrene or ethylbenzene together with internal standard cyclopentanol was dissolved in methylene chloride, a resulting solution was subjected to the gas chromatograph, and gas chromatography was carried out so that a calibration curve of styrene or ethylbenzene was obtained; and (7) from the calibration curve and each of the results of the gas chromatography carried out with respect to the air in the pressure-resistant glass container, the weight of styrene and ethylbenzene that had been emitted was calculated as a weight ratio (ppm) based on the weight of the foamed molded product. Obtained results are shown in Table 3.

Conditions for the gas chromatography were as follows.

Capillary column: Rtx-1, manufactured by GL Sciences Inc.
Column temperature condition: heating from 50°C to 80°C at a heating rate of at 3°C/min, then heating from 80°C to 180°C at a heating rate of 10°C/min
Carrier gas: helium

(Method for measuring average chord length of surface layer)

An average chord length per expanded particle of the foamed molded product was measured in accordance with ASTM-D-2842-97 with use of a photograph obtained by projecting a cross section of the foamed molded product. Specifically, in the photograph obtained by projecting the cross section of the foamed molded product, the average chord length was measured from expanded particles that were collinear on the cross section of the surface layer of the foamed molded product. Note that 10 expanded particles that were present in the surface layer of the foamed molded product are arbitrarily selected and an average of respective chord lengths of those expanded particles was regarded as a final numerical value (average chord length).

(Evaluation of fusibility)

A rate of fusion was calculated as follows: (1) the foamed molded product was broken; (2) the broken surface was observed, so that the number of particles of all (100%) particles present in an observation field of view, the particles being broken at a portion that is not a particle-to-particle interface, was measured; and (3) an obtained result was used to calculate the rate of fusion in accordance with the following equation.

$$\text{Rate of fusion (\%)} = \text{(the number of particles broken at a portion being not particle-to-particle interface)} / \text{the number of all particles present in observation field of view} \times 100.$$

From the rate of fusion thus obtained, heat resistance of the foamed molded product was evaluated in accordance with the following criteria.

Excellent (E): The rate of fusion being not less than 90%.
Good (G): The rate of fusion being not less than 70% and less than 90%.
Poor (P): The rate of fusion being less than 70%.

(Evaluation of heat resistance)

Heat resistance of the foamed molded product was evaluated as below by (a) calculating a rate of dimensional change of the foamed molded product which dimensional change was observed before and after the foamed molded product was allowed to stand at 90°C for 168 hours.

A foamed molded product having an expanding ratio of 20 times or 40 times was dried at 60°C for 24 hours. Then, a sample piece having a length of 150 mm, a width of 150 mm, and a thickness of 20 mm was cut out from the foamed molded product. The length of the sample piece in the length direction and the length of the sample piece in the width direction were measured, each for three parts of the sample piece, so that initial dimensions (D) were calculated. Subsequently, the foamed molded product was allowed to stand in a dryer at 90°C for 168 hours. Then, similar measurement was carried out, so that post-drying (at 90°C) dimensions (E) were calculated. The rate of dimensional change was calculated by the following equation. In accordance with an absolute value of the rate of dimensional change, heat resistance was evaluated based on the following criteria. The absolute value of the rate of dimensional change and the result of the evaluation of heat resistance are shown in Table 3.

The rate of dimensional change having a positive value indicates that initial (pre-drying) dimensions (D) are greater than the post-drying dimensions (E), i.e., that the foamed molded product has contracted. In contrast, the rate of dimensional change having a negative value indicates that the post-drying dimensions (E) are greater than the initial dimensions (D), i.e., that the foamed molded product has expanded.

$$\text{Rate of dimensional change (\%)} = ((D) - (E)) / (D) \times 100$$

Excellent (E): The rate of dimensional change having an absolute value of not more than 0.3.
Good (G): The rate of dimensional change having an absolute value of more than 0.3 and not more than 0.4.
Acceptable (A): The rate of dimensional change having an absolute value of more than 0.4 and not more than 0.5.
Poor (P): The rate of dimensional change having an absolute value of more than 0.5.

(Examples 1 to 8 and Comparative Examples 1 to 6)

A 6 L-autoclave with a stirrer was fed with 110 parts by weight of water, 0.105 parts by weight of tricalcium phosphate (a dispersing agent), and 0.0075 parts by weight of α-olein sodium sulfonate (a surfactant) together with a polymerization initiator, a flame retarder, an auxiliary flame retarder, a chain transfer agent, and a plasticizing agent in respective amounts shown in Tables 1 and 2. The autoclave was degassed with use of a vacuum pump until a gage pressure reached 0.06 MPa.

Then, a stirrer was used to start stirring the fed raw materials in the autoclave. While the fed raw materials were being stirred, styrene, acrylonitrile, and a macro monomer in the column of "Initial fed raw material" in respective amounts shown in Tables 1 and 2 were further fed into the autoclave. Then, the fed raw materials in the autoclave were stirred by the stirrer for 30 minutes. Subsequently, the first polymerization step was carried out by raising the temperature inside the autoclave to 90°C and maintaining the temperature inside the autoclave at "Polymerization temperature in first polymerization step", shown in Tables 1 and 2, for "Polymerization time in first polymerization step".

During the first polymerization step, after "Polymerization time in addition" shown in Tables 1 and 2 had passed since initiation of the first polymerization step, monomers shown in "Added monomer" in the column of "Addition step" in Tables 1 and 2 were added into the autoclave in respective amounts shown in Tables 1 and 2. A rate of copolymerization of the monomers in the column of "Initial fed raw material" in the autoclave in a case where the monomers shown in "Added monomer" in the column of "Addition step" had been added into the autoclave, i.e., a polymerization conversion rate was measured by the above-described method. The result of the measurement is shown in "Polymerization conversion rate in addition" in Tables 1 and 2.

After the first polymerization step was finished, i.e., after "Polymerization time in first polymerization step" shown in Tables 1 and 2 had passed, the blowing agent impregnation step together with the second polymerization step was carried out by (i) feeding the autoclave with 5 parts by weight of normal rich butane (part by weight of normal butane j part by weight of isobutane = 70/30) and (ii) maintaining the temperature inside the autoclave at "Polymerization temperature in second polymerization step", shown in Tables 1 and 2, for "Polymerization time in second polymerization step". That is, "Polymerization temperature in second polymerization step" and "Polymerization time in second polymerization step", which are shown in Tables 1 and 2, are the impregnation temperature and the impregnation time, respectively, in the blowing agent impregnation step. Then, the temperature inside the autoclave was reduced to 40°C, and dehydration was carried out. The drying step was further carried out at 40°C, so that expandable resin particles were obtained. The obtained expandable resin particles were subjected to the above-described various measurements and evaluations, the results of which are shown in Table 3.

[Table 1]

| | | | | | Example 1 | Example 2 | Example 3 | Example 4 | Example 5 | Example 6 | Example 7 | Example 8 |
|---|---|---|---|---|---|---|---|---|---|---|---|---|
| Composition | Initial fed raw material | Monomer | Styrene | Part by weight | 80.0 | 83.0 | 82.0 | 80.0 | 80.0 | 80.0 | 84.5 | 82.0 |
| | | | Acrylonitrile | Part by weight | 17.0 | 15.0 | 15.0 | 15.0 | 15.0 | 15.0 | 12.5 | 15.0 |
| | | | Macro monomer | Part by weight | 0 | 0 | 0 | 0 | 0 | 0 | 0 | 0 |
| | | | Amount of ethylbenzene monomer in amount (part by weight) of styrene monomer blended | $\times 10^{-4}$ Part by weight | 100 | 100 | 100 | 100 | 100 | 100 | 100 | 100 |
| | Addition step | Added monomer | Acrylonitrile | Part by weight | 3.0 | 2.0 | 3.0 | 5.0 | 5.0 | 5.0 | 3.0 | 3.0 |
| | | Polymerization conversion rate in addition | | % | 93.5 | 91.0 | 91.2 | 91.8 | 91.8 | 91.8 | 90.8 | 94.4 |
| | | Polymerization time in addition | | Hour | 5 | 5 | 5 | 5 | 5 | 5 | 5 | 6 |
| | Polymerization initiator | Polymerization initiator (X) | Benzoyl peroxide | Part by weight | 0.15 | 0.15 | 0.15 | 0.15 | 0.15 | 0.15 | 0.15 | 0.15 |
| | | Polymerization initiator (Y) | t-butylperoxy-2-ethylhexyl monocarbonate | Part by weight | 0.29 | 0.29 | 0.29 | 0.29 | 0.29 | 0.29 | 0.29 | 0.29 |
| | | | 1,1-bis(t-butyl peroxy)-3,3,5-trimethylcyclohexane | Part by weight | - | - | - | - | - | - | - | - |

| | | | Example 1 | Example 2 | Example 3 | Example 4 | Example 5 | Example 6 | Example 7 | Example 8 |
|---|---|---|---|---|---|---|---|---|---|---|
| | Flame retarder | Tetrabromo-bisphenol A-bis(2,3-di-bromo-2-methylpro-pyl)ether | Part by weight | 2.0 | 2.0 | 2.0 | 2.0 | 2.0 | 2.0 | 2.0 | 2.0 |
| | | Hexabromo-cyclodo-decane | Part by weight | - | - | - | - | - | - | - | - |
| | Auxiliary flame retarder | Dicumyl peroxide | Part by weight | 1.1 | 1.1 | 1.1 | 1.1 | 1.1 | 1.1 | 1.1 | 1.1 |
| | | 2,3-dime-thyl-2,3-diphenylbu-tane | Part by weight | - | - | - | - | - | - | - | - |
| | Chain transfer agent | $\alpha$-methylsty-rene dimer | Part by weight | 0.4 | 0.4 | 0.4 | 0.4 | 0.4 | 0.4 | 0.2 | 0.4 |
| | Plasticizing agent | Coconut oil | Part by weight | - | - | - | - | - | - | - | - |
| Polymerization condition | Polymerization temperature in first polymerization step | | °C | 90 | 90 | 90 | 90 | 90 | 90 | 90 | 90 |
| | Polymerization time in first polymerization step | | Hour | 6 | 6 | 6 | 6 | 6 | 6 | 6 | 7 |
| | Polymerization temperature in second polymerization step | | °C | 114 | 114 | 114 | 114 | 114 | 114 | 114 | 114 |
| | Polymerization time in second polymerization step | | Hour | 5 | 5 | 5 | 5 | 5 | 5 | 5 | 5 |

[Table 2]

| | | | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|
| Composition | Initial fed raw material | Monomer | Styrene | Part by weight | r 80.0 | 87.0 | 85.0 | 80.0 | 85.0 | 78.3 |
| | | | Acrylonitrile | Part by weight | 19.0 | 10.0 | 10.0 | 20.0 | 15.0 | 15.0 |
| | | | Macro monomer | Part by weight | 0 | 0 | 0 | 0 | 0 | 5.5 |
| | | | Amount of ethylbenzene monomer in amount (part by weight) of styrene monomer blended | $\times 10^{-4}$ Part by weight | 100 | 100 | 100 | 100 | 100 | 100 |
| | Addition step | Added monomer | Acrylonitrile | Part by weight | 1.0 | 3.0 | 5.0 | 0 | 0 | 1.25 |
| | | Polymerization conversion rate in addition | | % | 93.7 | 88.9 | 90.0 | - | - | 92.2 |
| | | Polymerization time in addition | | Hour | 5 | 5 | 5 | - | - | 6 |
| | Polymerization initiator | Polymerization initiator (X) | Benzoyl peroxide | Part by weight | 0.15 | 0.15 | 0.15 | 0.15 | 0.15 | 0.35 |
| | | Polymerization initiator (Y) | t-butylperoxy-2-ethylhexyl monocarbonate | Part by weight | 0.29 | 0.29 | 0.29 | 0.29 | 0.29 | - |
| | | | 1,1-bis(t-butyl peroxy)-3,3,5-trimethylcyclohexane | Part by weight | - | - | - | - | - | 0.21 |
| | Flame retarder | | Tetrabromobisphenol A-bis(2,3-dibromo-2-methylpropyl)ether | Part by weight | 2.0 | 2.0 | 2.0 | 2.0 | 2.0 | - |
| | | | Hexabromocyclododecane | Part by weight | - | - | - | - | - | 0.75 |
| | Auxiliary flame retarder | | Dicumyl peroxide | Part by weight | 1.1 | ' 1.1 | 1.1 | 1.1 | 1.1 | - |
| | | | 2,3-dimethyl-2,3-diphenylbutane | Part by weight | - | - | - | - | - | 0.21 |
| | Chain transfer agent | | $\alpha$-methylstyrene dimer | Part by weight | 0.6 | 0.2 | 0.2 | 0.6 | 0.4 | 0.2 |

| | | | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|
| | Plasticizing agent | Coconut oil | Part by weight | - | - | - | - | - | 1 |
| Polymerization condition | Polymerization temperature in first polymerization step | | °C | 90 | 90 | 90 | 90 | 90 | 85 |
| | Polymerization time in first polymerization step | | Hour | 6 | 6 | 6 | 5 | 5 | 6 |
| | Polymerization temperature in second polymerization step | | °C | 114 | 114 | 114 | 114 | 114 | 114 |
| | Polymerization time in second polymerization step | | Hour | 5 | 5 | 5 | 8 | 8 | 5 |
| *"Comp. Ex." stands for "Comparative Example". | | | | | | | | | |

[Table 3]

| | | Unit | Example 1 | Example 2 | Example 3 | Example 4 | Example 5 | Example 6 | Example 7 | Example 8 |
|---|---|---|---|---|---|---|---|---|---|---|
| Expandable resin particles | Weight average molecular weight (Mw) | ×10⁻⁴ | 19.2 | 18.9 | 20.4 | 20.3 | 20.3 | 20.3 | 21.4 | 20.1 |
| | Styrene content | ppm | ND | ND | ND | ND | ND | ND | ND | ND |
| | Ethylbenzene content | ppm | 97 | 98 | 98 | 98 | 98 | 98 | 97 | 98 |
| Expanded particles | Expanding ratio | $cm^3/g$ | 22 | 22 | 22 | 12 | 22 | 42 | 22 | 22 |
| | D2230/D1600 | - | 1.47 | 1.23 | 1.43 | - | 1.91 | - | 1.27 | 1.73 |
| | Blocking property | - | G | G | G | G | G | G | G | G |
| Foamed molded product | Expanding ratio | $cm^3/g$ | 20 | 20 | 20 | 10 | 20 | 40 | 20 | 20 |
| | Amount of styrene emitted | ppm | 0.72 | 0.90 | 0.77 | 0.8 | 0.45 | 0.15 | 0.89 | 0.56 |
| | Amount of ethylbenzene emitted | ppm | 8.0 | 10.0 | 8.5 | 6.5 | 5.0 | 3.3 | 10.0 | 6.0 |
| | Average chord length | µm | 55 | 60 | 60 | 55 | 60 | 62 | 65 | 60 |
| | Rate of fusion | - | E | E | E | E | G | G | E | G |
| Physical properties | Heat resistance at 90°C | Absolute value | 0.25 | 0.34 | 0.27 | 0.08 | 0.14 | 0.32 | 0.31 | 0.20 |
| | | - | E | G | E | E | E | G | G | E |

[Table 3] cont.

| Physical properties | | | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|
| | Expandable resin particles | Weight average molecular weight (Mw) | $\times 10^{-4}$ | 19.5 | 21.1 | 19.9 | 19.4 | 19.8 | 23.0 |
| | | Styrene content | ppm | ND | ND | ND | ND | ND | 100 |
| | | Ethylbenzene content | ppm | 97 | 98 | 98 | 98 | 98 | 97 |
| | Expanded particles | Expanding ratio | $cm^3/g$ | 22 | 22 | 22 | 22 | 22 | 22 |
| | | D2230/D1600 | - | 1.14 | 0.98 | 1.19 | 0.8 | 0.54 | 1.03 |
| | | Blocking property | - | G | G | G | G | G | G |
| | Foamed molded product | Expanding ratio | $cm^3/g$ | 20 | 20 | 20 | 20 | 20 | 20 |
| | | Amount of styrene emitted | ppm | 1.10 | 1.30 | 1.00 | 2.40 | 4.10 | 16.00 |
| | | Amount of ethylbenzene emitted | ppm | 11.0 | 15.0 | 10.5 | 18.0 | 22.0 | 13.0 |
| | | Average chord length | μm | 60 | 70 | 75 | 60 | 100 | 70 |
| | | Rate of fusion | - | E | E | E | E | E | E |
| | | Heat resistance at 90°C | Absolute value | 0.40 | 0.55 | 0.41 | 0.36 | 0.60 | 0.48 |
| | | | - | G | P | A | G | P | A |

*"Comp. Ex." stands for "Comparative Example".

EP 4 122 979 A1

It has been shown from Table 3 that the expandable resin particles of Examples 1 to 8 in accordance with an embodiment of the present invention have a low styrene content and a low ethylbenzene content. It has also been shown that in foamed molded products of Examples 1 to 8, styrene is emitted in an amount of less than 1.00 ppm, and ethylbenzene is emitted in an amount of less than 10.5 ppm. It has also been shown that expanded particles produced by expanding the expandable resin particles of Examples 1 to 8 at an expanding ratio of 22 times have D2230/D1600 of not less than 1.20 and satisfy the criteria. It has also been shown that a blocking property of the expanded particles of Examples 1 to 8 is Good (G) and that heat resistance at 90°C of the foamed molded products of Examples 1 to 8 is Good (G) or Excellent (E).

In contrast, Comparative Examples 1 to 6 are outside the scope of an embodiment of the present invention. It has therefore been shown that in foamed molded products of Comparative Examples 1 to 6, styrene is emitted in an amount of not less than 1.00 ppm, and ethylbenzene is emitted in an amount of not less than 10.5 ppm. It has also been shown that heat resistance at 90°C of the foamed molded products of Comparative Examples 2 and 5 is Poor (P).

Industrial Applicability

According to an embodiment of the present invention, it is possible to provide expandable resin particles that have a reduced VOC content, a method for producing the expandable resin particles, and a foamed molded product in which a smaller amount of VOC is emitted. Thus, an embodiment of the present invention is suitably applicable to the fields of automobiles and building materials.

**Claims**

1. Expandable resin particles comprising:

    a base resin containing, as structural units, a styrene unit and an acrylonitrile unit; and
    a blowing agent,
    in the base resin, (a) a content of the styrene unit being 80.0 parts by weight to 84.5 parts by weight and a content of the acrylonitrile unit being 15.5 parts by weight to 20.0 parts by weight, and (b) a total content of the styrene unit and the acrylonitrile unit being 100 parts by weight, and
    expanded particles having D2230/D1600 of not less than 1.20, the expanded particles being produced by expanding the expandable resin particles at an expanding ratio of 22 times,
    where the D2230/D1600 is a ratio between an absorbance at a wavelength of 2230 $cm^{-1}$ (D2230) and an absorbance at a wavelength of 1600 $cm^{-1}$ (D1600) in an infrared absorption spectrum obtained by attenuated total reflection Fourier-transform infrared spectroscopy with respect to a surface of the expanded particles.

2. The expandable resin particles as set forth in claim 1, wherein the expandable resin particles have a styrene content of less than 20 ppm and an ethylbenzene content of not more than 130 ppm.

3. Expanded particles produced by expanding expandable resin particles recited in claim 1 or 2.

4. A foamed molded product produced by carrying out in-mold molding with respect to expanded particles recited in claim 3.

5. The foamed molded product as set forth in claim 4, wherein styrene is emitted in an amount of less than 1.00 ppm, and ethylbenzene is emitted in an amount of less than 10.5 ppm.

6. The foamed molded product as set forth in claim 4 or 5, wherein the foamed molded product has an expanding ratio of not less than 5 times and less than 40 times.

7. A method for producing expandable resin particles, comprising:

    a copolymerization step of copolymerizing a monomer mixture containing a styrene monomer and an acrylonitrile monomer to obtain a copolymer; and
    a blowing agent impregnation step of impregnating a blowing agent in the copolymer thus obtained,
    the copolymerization step further including (a) a feeding step of feeding, into a container, an initial monomer mixture containing the styrene monomer and a part of the acrylonitrile monomer, and (b) an addition step of adding a part of the acrylonitrile monomer to a reaction mixture after polymerization of the initial monomer mixture is initiated,

in the copolymerization step, (a) the styrene monomer being used in a total amount of 80.0 parts by weight to 84.5 parts by weight and the acrylonitrile monomer being used in a total amount of 15.5 parts by weight to 20.0 parts by weight, and (b) the styrene monomer and the acrylonitrile monomer being used in a total amount of 100 parts by weight, and

in the addition step, the part of the acrylonitrile monomer being added to the reaction mixture in an amount of 2.0 parts by weight to 5.0 parts by weight.

8. The method as set forth in claim 7, wherein the addition step is carried out at any point in time after a polymerization conversion rate reaches 85%.

9. The method as set forth in claim 7 or 8, wherein in the feeding step, the part of the acrylonitrile monomer is contained in the initial monomer mixture in an amount of 12.0 parts by weight to 18.0 parts by weight.

**INTERNATIONAL SEARCH REPORT**

| International application No. |
| --- |
| PCT/JP2021/008492 |

A.  CLASSIFICATION OF SUBJECT MATTER
Int.Cl. C08J9/16(2006.01)i
FI: C08J9/16CET

According to International Patent Classification (IPC) or to both national classification and IPC

B.  FIELDS SEARCHED

Minimum documentation searched (classification system followed by classification symbols)
Int.Cl. C08J9/00-9/42, B29C44/00-44/60, 67/20-67/20

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 2008-260795 T (KANEKA CORPORATION) 30 October 2008 (2008-10-30), claims 1-3, paragraphs [0030], [0040], [0048], example 1, table 1 | 1-9 |
| P, A | WO 2020/184007 A1 (KANEKA CORPORATION) 17 September 2020 (2020-09-17), claims 1-10 | 1-9 |
| A | JP 2011-026509 A (SEKISUI PLASTICS CO., LTD.) 10 February 2011 (2011-02-10), claims 1-7, paragraph [0043] | 1-9 |
| A | JP 2016-023305 A (KANEKA CORPORATION) 08 February 2016 (2016-02-08), claims 1-9, paragraphs [0052]-[0054] | 1-9 |
| A | JP 57-185328 A (THE DOW CHEMICAL COMPANY) 15 November 1982 (1982-11-15), claims | 1-9 |

☐  Further documents are listed in the continuation of Box C.          ☒  See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| 21 April 2021 | 11 May 2021 |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

34

**INTERNATIONAL SEARCH REPORT**
Information on patent family members

| International application No. |
|---|
| PCT/JP2021/008492 |

```
JP 2008-260795 A   30 October 2008     (Family: none)

WO 2020/184007 A1  17 September 2020   (Family: none)

JP 2011-026509 A   10 February 2011    (Family: none)

JP 2016-023305 A   08 February 2016    (Family: none)

JP 57-185328 A     15 November 1982    (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017052894 A
- JP 2015151486 A
- JP 2016164213 A

- JP 2008260795 A
- WO 2020032178 A
- JP 2004203932 A